# EUROPEAN PATENT APPLICATION

(11) **EP 4 491 550 A1**
(43) Date of publication of application: **15.01.2025**
(21) Application number: 23766369.5
(22) Date of filing: 02.02.2023
(51) Int. Cl.: B65G 65/46, B65D 88/26

(54) **POWDER SUPPLY DEVICE**

(30) Priority: 08.03.2022 JP 2022035440
(71) Applicant: FUJIFILM Corporation, Tokyo 106-8620 (JP)
(72) Inventor: ISHIKAWA, Keiichi, Ashigarakami-gun, Kanagawa 258-8577 (JP)
(74) Representative: Hoffmann Eitle
(86) International application number: PCT/JP2023/003478
(87) International publication number: WO 2023/171189

(57) **Abstract**

There is provided a powder supply device which can suppress segregation of powder that occurs in a hopper in a case where a mixture of a plurality of types of powder is supplied to a container using a hopper and an auger screw.

A powder supply device includes a hopper that accommodates powder and has a funnel-shaped inner wall surface of which an inner diameter is decreased downward, the inner wall surface having at least two surfaces of a gentle slope surface having a relatively gentle tilt angle with respect to a horizontal direction and a steep slope surface having a relatively steep tilt angle with respect to the horizontal direction and having one or more boundary portions that change from the gentle slope surface positioned relatively upward to the steep slope surface positioned relatively downward; a tubular discharge unit that is connected to a lower portion of the hopper and in which a discharge port through which the powder is discharged is formed at a lower end; and an auger screw, at least a part of which is disposed in the discharge unit, which transports the powder toward the discharge port, and which has a rotation axis extending in an up-down direction along a cylinder axis of the discharge unit and a helical blade provided around the rotation axis.

## Description

### BACKGROUND OF THE INVENTION

### 1. Field of the Invention

A technology of the present disclosure relates to a powder supply device.

### 2. Description of the Related Art

A powder supply device that supplies powder toward a container in order to fill the container with powder including granules and the like is known. The powder supplied using such a powder supply device may have a distribution in any one or more of a particle diameter, a density, a shape, or the like. Examples of such powder include granules of a bioaffinity polymer such as collagen or gelatin, and such powder is a mixture of powder having different particle diameters or shapes. In addition, there is a powder culture medium product consisting of a plurality of components for pH adjustment or the like, and such powder is a mixture of a plurality of types of powder having different densities. In a case where the product is a mixture of such powder, in a case where the component proportion of a plurality of types of powder is changed for each container, the quality varies from container to container, and therefore, it is necessary to equalize the component proportion of powder for each container.

As the powder supply device, for example, a device is known in which powder is accommodated in a substantially funnel-shaped hopper of which the diameter is decreased downward and the powder is supplied to the container by the rotation of an auger screw. The auger screw is disposed on a cylindrical member provided at a lower end of the hopper, and a part on an upper end side of the auger screw enters the hopper (for example, refer to JP2018-43813Aand JP1994-53500U (JP-H6-53500U)).

In this powder supply device, due to the rotation of the auger screw, the powder in the hopper is transported downward via the cylindrical member and is discharged from a discharge port. The cylindrical member has a diameter slightly larger than the diameter of the auger screw. The auger screw is provided to keep the amount of the powder transported in the cylindrical member toward the discharge port per unit time constant.

In the powder supply device disclosed in JP2018-43813A and JP1994-53500U (JP-H6-53500U), an inclined surface inside the hopper is maintained at a constant angle in a section until the hopper is connected to the cylindrical member.

### SUMMARY OF THE INVENTION

However, in the hopper as disclosed in JP2018-43813A and JP1994-53500U (JP-H6-53500U), in a case where the residual amount of the powder in the hopper is small, segregation of the powder occurs in the vicinity of the auger screw in some cases. The segregation refers to that, in a case where the powder is a mixture of powder having different particle diameters, the powder having different particle diameters is not evenly dispersed in the mixture and is biased. In a case where the segregation occurs in the vicinity of the auger screw, the distribution of the mixture of powder supplied by the auger screw (for example, the distribution of particles having a large particle diameter and the particles having a small particle diameter) is changed over time from the initial stage of the start of the supply to the container to the end stage. For example, in the initial stage of the start of the supply in which the residual amount of the powder in the hopper is large, the distribution of the mixture supplied to the container is kept constant. However, in a case where the residual amount of the powder in the hopper is reduced and thus segregation occurs, the distribution of the mixture supplied to the container is changed as compared with the distribution at the initial stage of the start of the supply. In a case where the distribution of the mixture of the powder is changed over time in this manner, the distribution of the mixture filled in the container is changed for each container, and thus the quality of the product is not ensured in some cases.

According to the experiment conducted by the present inventors, it was found that, for example, segregation occurs as follows in a case where a mixture of powder consists of two types of large particles having a large particle diameter and small particles having a small particle diameter. In a case where the residual amount in the hopper is large, a deposition surface of the powder in the hopper (that is, a powder surface on an upper part of the powder) is raised higher at the central portion of the hopper than at the outer side, or is maintained at a substantially constant height from the central portion of the hopper toward the outer side. However, in a case where the supply of the powder in the hopper progresses and the residual amount of the powder in the hopper is decreased, the deposition surface of the powder has a shape in which the central portion where the auger screw is disposed is lowest and which becomes higher toward the outer side. That is, the deposition surface of the powder is inclined along the inclined surface of the hopper. A tilt angle of the deposition surface of the powder with respect to the horizontal direction is gentler than that of the inclined surface of the hopper, but in a case where the angle of the inclined surface to the cylindrical member where the auger screw is disposed is constant, as in the hopper disclosed in JP2018-43813A and JP1994-53500U (JP-H6-53500U), the tilt angle of the deposition surface of the powder toward the auger screw is also substantially constant. In a case where the deposition surface of the powder having a substantially constant inclination is formed in this manner, particles that are easy to roll (for example, large particles having a relatively large particle diameter) roll along the inclination of the deposition surface toward the central portion of the auger screw before particles that are relatively difficult to roll (for example, small particles having a relatively small particle diameter). The large particles that reach the vicinity of the auger screw first are discharged first, while the small particles are left in the vicinity of the wall surface of the hopper. As a result, segregation of the powder occurs in the hopper. As described above, in a case where segregation of the powder occurs, the distribution of the mixture supplied to the container may not be stable for each container.

The present disclosure has been made in consideration of the above circumstances, and an object thereof is to provide a powder supply device that can suppress segregation of powder that occurs in a hopper in a case where a mixture of a plurality of types of powder is supplied to a container using a hopper and an auger screw.

A powder supply device according to an aspect of the present disclosure includes a hopper that accommodates powder and has a funnel-shaped inner wall surface of which an inner diameter is decreased downward, the inner wall surface having at least two surfaces of a gentle slope surface having a relatively gentle tilt angle with respect to a horizontal direction and a steep slope surface having a relatively steep tilt angle with respect to the horizontal direction and having one or more boundary portions that change from the gentle slope surface positioned relatively upward to the steep slope surface positioned relatively downward; a tubular discharge unit that is connected to a lower portion of the hopper and in which a discharge port through which the powder is discharged is formed at a lower end; and an auger screw, at least a part of which is disposed in the discharge unit, which transports the powder toward the discharge port, and which has a rotation axis extending in an up-down direction along a cylinder axis of the discharge unit and a helical blade provided around the rotation axis.

In the powder supply device according to the aspect, in a case where the gentle slope surface is a first gentle slope surface, a second gentle slope surface having a gentler inclination than the steep slope surface is provided between the steep slope surface and an upper end of the discharge unit, and the second gentle slope surface of the hopper and the discharge unit may be connected to each other.

In addition, in the powder supply device according to the aspect, an upper end of the blade of the auger screw may be disposed at the same level as a lower end of the steep slope surface or above the lower end of the steep slope surface.

In addition, in the powder supply device according to the aspect, at least one of a condition in which a height of the second gentle slope surface in a rotation axis direction of the auger screw is 1.5 times or more a pitch of the blade, a condition in which a height of the steep slope surface in the rotation axis direction of the auger screw is 1 times or more the pitch of the blade of the auger screw, or a condition in which an inner diameter of an upper end of the steep slope surface is 1.7 times or more an outer diameter of the blade of the auger screw may be satisfied.

In addition, in the powder supply device according to the aspect, a condition in which a difference between an inner diameter of an upper end of the steep slope surface and an outer diameter of the blade of the auger screw is 5 times or more an average particle diameter of the powder may be satisfied.

In addition, in the powder supply device according to the aspect, a lower end of the steep slope surface and an upper end of the discharge unit may be directly connected to each other.

In addition, in the powder supply device according to the aspect, at least one of a condition in which a height from the lower end to an upper end of the steep slope surface is 6 times or more a pitch of the blade of the auger screw or a condition in which an inner diameter of the upper end of the steep slope surface is 2 times or more an outer diameter of the blade of the auger screw may be satisfied.

In addition, in the powder supply device according to the aspect, a difference between an inner diameter of an upper end of the steep slope surface and an outer diameter of the blade of the auger screw may be set to be 10 times or more an average particle diameter of the powder.

In addition, in the powder supply device according to the aspect, a plurality of sets of the gentle slope surface, the boundary portion, and the steep slope surface may be formed in an up-down direction of the hopper.

In addition, in the powder supply device according to the aspect, the one or more steep slope surfaces may be parallel to the rotation axis of the auger screw.

According to the technology of the present disclosure, it is possible to suppress segregation of powder that occurs in a hopper in a case where a mixture of a plurality of types of powder is supplied to a container using a hopper and an auger screw.

### BRIEF DESCRIPTION OF THE DRAWINGS

Fig. 1 is a cross-sectional view illustrating an overall configuration of a powder supply device according to a first embodiment.
Fig. 2 is a cross-sectional view illustrating the hopper and a vicinity of a discharge unit of the powder supply device according to the first embodiment.
Fig. 3 is a front view illustrating an auger screw of the powder supply device according to the first embodiment.
Fig. 4A is a cross-sectional view illustrating a state where an amount of powder accommodated in the hopper is large in the powder supply device according to the first embodiment.
Fig. 4B is a cross-sectional view illustrating a state where an amount of powder accommodated in the hopper is reduced in the powder supply device according to the first embodiment.
Fig. 4C is a cross-sectional view illustrating a state where segregation of powder occurs in a case where an amount of the powder accommodated in the hopper is further reduced in the powder supply device according to the first embodiment.
Fig. 5A is a cross-sectional view illustrating a state where a slope surface of powder accommodated in the hopper is generated in the powder supply device according to the first embodiment.
Fig. 5B is a cross-sectional view illustrating a state where small particles having a relatively small particle diameter, of the powder accommodated in the hopper, remain on a wall surface of the hopper in the powder supply device according to the first embodiment.
Fig. 5C is a cross-sectional view illustrating a state where small particles having a relatively small particle diameter are moved toward the auger screw by a boundary portion between a gentle slope surface and a steep slope surface of the hopper in the powder supply device according to the first embodiment.
Fig. 5D is a cross-sectional view illustrating a state where segregation of powder in the vicinity of the auger screw in the hopper is suppressed in the powder supply device according to the first embodiment.
Fig. 6 is a cross-sectional view illustrating a hopper and a discharge unit of a powder supply device according to a first comparative example.
Fig. 7A is a cross-sectional view illustrating a state where an amount of powder accommodated in the hopper is large in the powder supply device according to the first comparative example.
Fig. 7B is a cross-sectional view illustrating a state where the amount of powder accommodated in the hopper is small and a slope surface of powder is generated in the powder supply device according to the first comparative example.
Fig. 7C is a cross-sectional view illustrating a state where powder is discharged to the discharge unit while segregation of the powder accommodated in the hopper has occurred in the powder supply device according to the first comparative example.
Fig. 8 is a diagram illustrating conditions and results of an experiment in which statuses of segregation of powder in the hopper of the powder supply device according to the first embodiment and the first comparative example are compared with each other.
Fig. 9 is a graph illustrating a relationship between a residual amount of powder in the hopper and a proportion of small particles in the powder in the hopper in the powder supply device according to the first embodiment and the first comparative example.
Fig. 10A is a graph illustrating a relationship between a particle diameter and a relative frequency in powder of a first example.
Fig. 10B is a graph illustrating a relationship between a particle diameter and a relative frequency in powder of a second example.
Fig. 11 is a graph illustrating a particle diameter representative value of small particles and a particle diameter representative value of large particles in the powder of the first example.
Fig. 12 is a cross-sectional view illustrating a hopper and a vicinity of a discharge unit of a powder supply device according to a second embodiment.
Fig. 13 is a cross-sectional view illustrating a hopper and a vicinity of a discharge unit of a powder supply device according to a third embodiment.
Fig. 14 is a diagram illustrating conditions and results of an experiment in which statuses of segregation of powder in the hopper of the powder supply device according to the second and third embodiments and the first comparative example are compared with each other.
Fig. 15 is a graph illustrating a relationship between a residual amount of powder in the hopper and a proportion of small particles in the powder in the hopper in the powder supply device according to the second and third embodiments and the first comparative example.
Fig. 16 is a diagram illustrating conditions and results of an experiment in which statuses of segregation of powder in the hopper of the powder supply device according to the second, fourth, fifth, and sixth embodiments and the first and second comparative examples are compared with each other.
Fig. 17 is a graph illustrating a relationship between a residual amount of powder in the hopper and a proportion of small particles in the powder in the hopper in the powder supply device according to the second, fourth, fifth, and sixth embodiments and the first and second comparative examples.
Fig. 18 is a diagram illustrating conditions of an experiment in which statuses of segregation of powder in the hopper of the powder supply device according to the second, seventh, eighth, ninth, tenth, eleventh, and twelfth embodiments and the first comparative example are compared with each other.
Fig. 19 is a cross-sectional view illustrating a hopper and a vicinity of a discharge unit of a powder supply device according to a thirteenth embodiment.
Fig. 20 is a diagram illustrating conditions and results of an experiment in which statuses of segregation of powder in the hopper of the powder supply device according to the second and thirteenth embodiments and the first comparative example are compared with each other.
Fig. 21 is a graph illustrating a relationship between a residual amount of powder in the hopper and a proportion of small particles in the powder in the hopper in the powder supply device according to the second and thirteenth embodiments and the first comparative example.
Fig. 22 is a diagram illustrating conditions and results of an experiment in which statuses of segregation of powder in the hopper of the powder supply device according to the thirteenth and fourteenth embodiments to the first comparative example are compared with each other.
Fig. 23 is a graph illustrating a relationship between a residual amount of powder in the hopper and a proportion of small particles in the powder in the hopper in the powder supply device according to the thirteenth and fourteenth embodiments and the first comparative example.

### DESCRIPTION OF THE PREFERRED EMBODIMENTS

Embodiments for carrying out a technology of the present disclosure will be described below. In the following description, a direction indicated by an arrow UP, which is appropriately illustrated in the drawings, will be defined as an upper side of a device in an up-down direction. The up-down direction of the device coincides with the vertical direction in the present example. In addition, since a ratio of each member to powder is appropriately changed in each drawing to make it easier to understand the configuration of the powder supply device, an actual ratio of each member to powder is not necessarily reflected.

### [First embodiment]

### (Overall configuration of powder supply device)

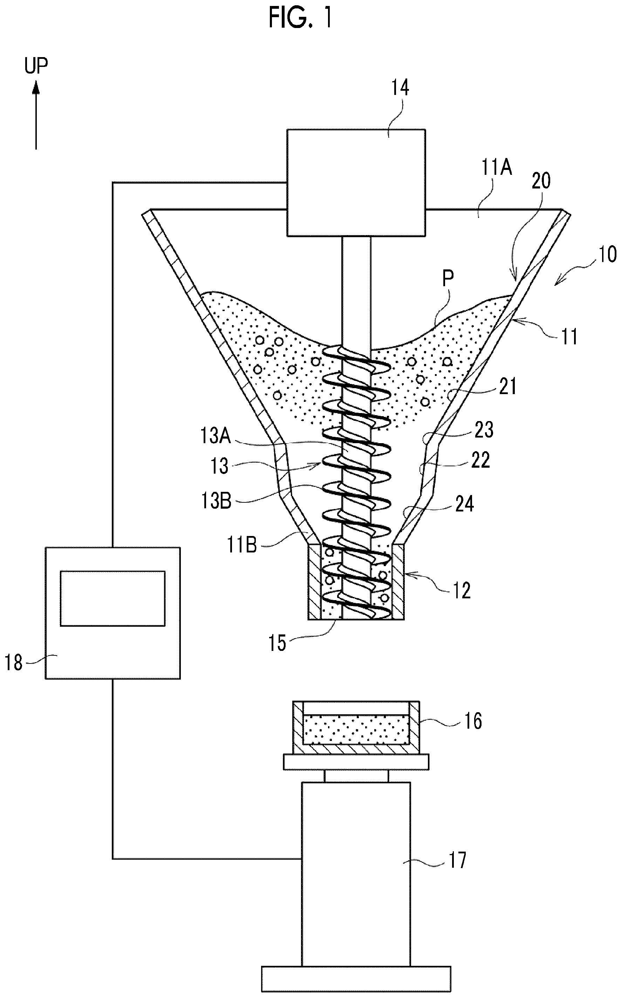

An example of a powder supply device 10 according to a first embodiment is illustrated in Fig. 1. As illustrated in Fig. 1, the powder supply device 10 includes a hopper 11 that accommodates powder P, a discharge unit 12 that is connected to a lower end of the hopper 11, and an auger screw 13 of which at least a part is disposed in the discharge unit 12. In addition, the powder supply device 10 includes a driving unit 14 that rotationally drives the auger screw 13, and a discharge port 15 that is formed at a lower end of the discharge unit 12 and through which the powder P is discharged.

In addition, as an example, a container 16 is disposed below the discharge port 15, and the container 16 is filled with the powder P discharged from the discharge port 15. Furthermore, a measuring unit 17 that measures a filling amount of the powder P in the container 16, and a control unit 18 that controls the driving unit 14 according to the filling amount of the powder P measured by the measuring unit 17.

### (Powder)

The powder P supplied by the powder supply device 10 has a distribution in any one or more of a particle diameter, a density, or a shape. The powder P includes granules and the like in addition to powder. Here, the density is a true density which means a specific gravity. In a case where the powder P has a distribution in any one or more of a particle diameter, a density, or a shape, there may be a difference in the easiness of rolling of the powder P accommodated in the hopper 11. For example, as the particle diameter of the powder P is large, the powder P tends to easily roll. In this case, a segregation phenomenon occurs in which particles having a relatively small particle diameter remain in the upper portion of the hopper 11 in the vertical direction and particles having a relatively large particle diameter sink to the lower portion of the hopper 11 in the vertical direction. In addition, in the powder P, particles having a relatively large specific gravity, particles having a high sphericity (a shape relatively close to a sphere), and the like are relatively easy to roll and move downward in the hopper 11. In the first embodiment, the powder P has large particles LP having a relatively large particle diameter and small particles SP having a particle diameter relatively smaller than that of the large particles LP.

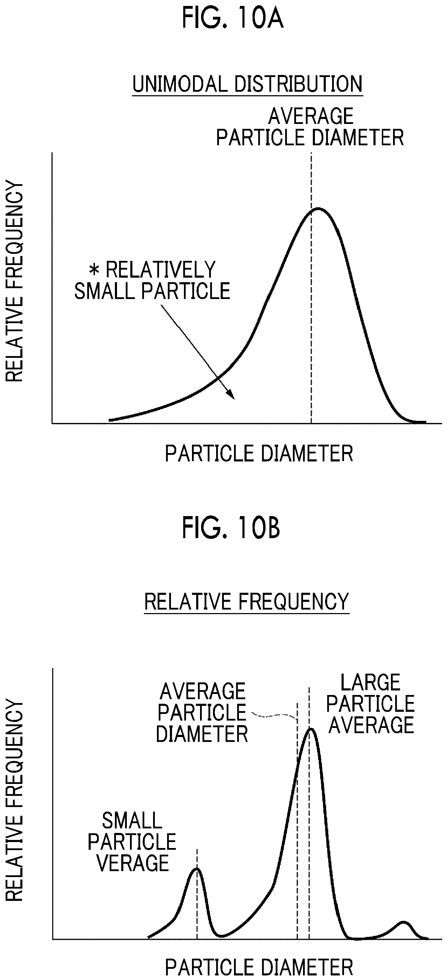

Here, the distribution of the particle diameter of the powder P will be described. Fig. 10A is a graph illustrating a relationship between a particle diameter and a relative frequency in the powder P of a first example. Fig. 10B is a graph illustrating a relationship between a particle diameter and a relative frequency in the powder P of a second example. There are a case where the distribution of the powder P is unimodal illustrated in Fig. 10A and a case where the distribution of the powder P is multimodal illustrated in Fig. 10B.

As illustrated in Fig. 10A, in the example of the unimodal type, the granulated powder P is evenly present from the small particles SP to the large particles LP. In this case, the small particles SP, which are relatively small in the distribution, remain in the hopper 11 finally.

As illustrated in Fig. 10B, an example of the multimodal type is a distribution that is likely to occur in a case where a plurality of pieces of powder P having significantly different properties are mixed. The first embodiment illustrates a filling example of a multimodal distribution powder in which small particles SP and large particles LP, which have different particle diameters, are mixed. In this case, the average particle diameter of the small particles SP and the average particle diameter of the large particles LP are calculated, respectively. In the first embodiment, the large particles LP and the small particles SP are spherical. For example, the average particle diameter of the large particles LP is 1.0 mm, and the average particle diameter of the small particles SP is 0.5 mm. Each of the average particle diameters is a diameter. In addition, for example, the proportion of the small particles SP in the entire powder P initially accommodated in the hopper 11 is 10%, and the bulk density thereof is 0.2 g/cc. Note that the average particle diameter of the entire powder P (that is, the average particle diameter of all the particles included in the powder P) obtained by combining the large particles LP and the small particles SP approaches the particle diameter of particles (large particles LP in the example of Fig. 10B) that are included in large quantities. The average particle diameter of the entire powder P will be described later.

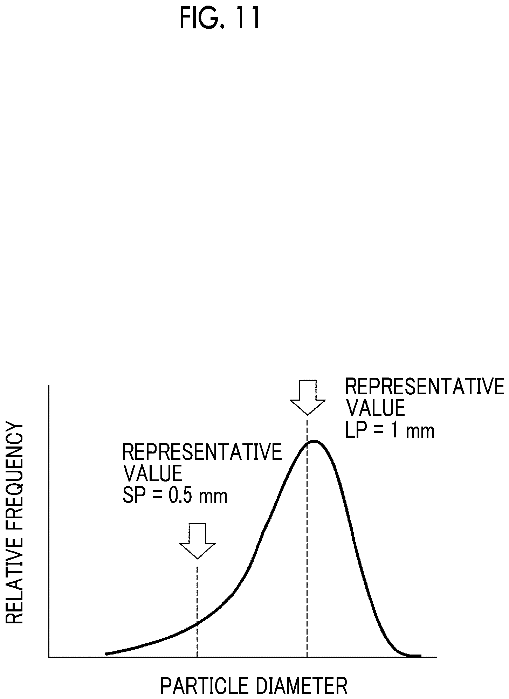

As illustrated in Fig. 11, in the case of the unimodal type, a representative value of the particle diameters of the large particles LP is 1.0 mm, and a representative value of the particle diameters of the small particles SP is 0.5 mm. Note that the average particle diameter of the entire powder P is a value close to the peak of the distribution illustrated in Fig. 11.

### (Hopper)

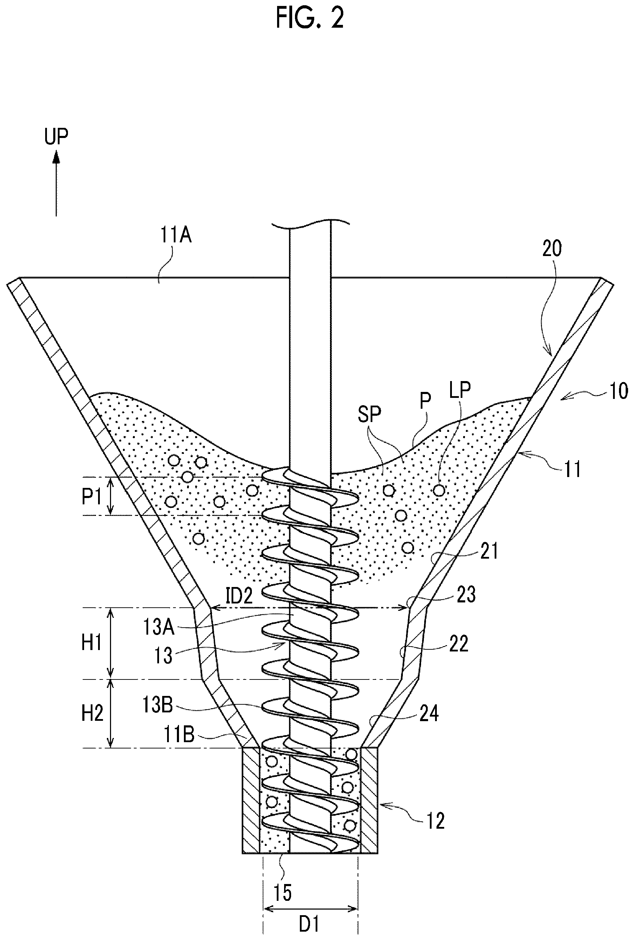

As illustrated in Figs. 1 and 2, the hopper 11 has a funnel-shaped inner wall surface 20 of which the inner diameter is decreased downward in the up-down direction (that is, the vertical direction). An upper end part 11A of the hopper 11 is open and the powder P is put to the inside of the hopper 11 from the upper end part 11A of the hopper 11. An opening is formed at a lower end part 11B of the hopper 11 and the discharge unit 12 is connected to the lower end part 11B of the hopper 11.

The inner wall surface 20 of the hopper 11 has at least two surfaces of a first gentle slope surface 21 having a relatively gentle tilt angle with respect to the horizontal direction and a steep slope surface 22 having a relatively steep tilt angle with respect to the horizontal direction. The inner wall surface 20 of the hopper 11 has one or more boundary portions 23 that change from the first gentle slope surface 21 positioned relatively upward to the steep slope surface 22 positioned relatively downward. The first gentle slope surface 21 is an example of a gentle slope surface. In the first embodiment illustrated in Fig. 1, the inner wall surface 20 of the hopper 11 has two surfaces of the first gentle slope surface 21 and the steep slope surface 22 positioned below the first gentle slope surface 21, and has one boundary portion 23 that changes from the first gentle slope surface 21 positioned upward to the steep slope surface 22 positioned downward.

Furthermore, a second gentle slope surface 24 having a gentler inclination than the steep slope surface 22 (that is, the tilt angle with respect to the horizontal direction is gentle) is provided between the steep slope surface 22 of the inner wall surface 20 of the hopper 11 and the upper end of the discharge unit 12. The second gentle slope surface 24 of the hopper 11 and the discharge unit 12 are connected to each other.

### (Discharge unit)

As illustrated in Figs. 1 and 2, the discharge unit 12 is a tubular member extending in an axis direction. For example, the discharge unit 12 has a cylindrical shape. For example, the discharge unit 12 is disposed such that the cylinder axis direction is disposed along the up-down direction, and the upper end of the discharge unit 12 is connected to the lower end part 11B (the second gentle slope surface 24 in the first embodiment) of the hopper 11. As a result, the powder P in the hopper 11 is supplied to the discharge unit 12 from the lower end part 11B.

The discharge port 15 is provided at the lower end of the discharge unit 12, and the powder P supplied to the discharge unit 12 is discharged from the discharge port 15.

### (Auger screw and driving unit)

As illustrated in Figs. 1 to 3, the auger screw 13 includes a rotation shaft 13A and a helical blade 13B provided around the rotation shaft 13A. The helical blade 13B protrudes outward from the rotation shaft 13A in a radial direction. A part of the rotation shaft 13A in the axis direction is disposed inside the discharge unit 12 along the cylinder axis of the discharge unit 12. In the first embodiment, the cylinder axis of the discharge unit 12 is in the up-down direction, and the rotation shaft 13A extends in the up-down direction.

The auger screw 13 is provided to stabilize a discharge amount per unit time of the powder P discharged from the discharge port 15 of the discharge unit 12. The powder P that has entered the discharge unit 12 from the upper end of the discharge unit 12 is placed on the helical blade 13B of the auger screw 13. In a case where the auger screw 13 is rotated, the powder P placed on the helical blade 13B is sequentially transported downward. Since the pitch of the helical blade 13B is constant, the amount of the powder P placed on each position of the helical blade 13B is also substantially constant. For this reason, in a case where the auger screw 13 is rotated at a constant speed, a transport amount per unit time of the powder P transported downward by the helical blade 13B is stable, and as a result, the discharge amount of the powder P from the discharge port 15 is also stable.

The rotation shaft 13A of the auger screw 13 is disposed over the discharge unit 12 and the hopper 11. As an example, the lower end of the auger screw 13 falls within the discharge unit 12. The upper end part of the rotation shaft 13A extends up to the vicinity of the upper end part 11A of the hopper 11, and the driving unit 14 is provided at the upper end part of the rotation shaft 13A.

The blade 13B is provided in a range of the lower portion side of the hopper 11 from the discharge unit 12 in the up-down direction of the rotation shaft 13A. The blade 13B is not provided on the upper portion side of the hopper 11. For example, the upper end of the blade 13B of the auger screw 13 is disposed above the lower end of the steep slope surface 22 of the hopper 11. In the first embodiment, the upper end of the blade 13B of the auger screw 13 is disposed above the upper end (that is, the boundary portion 23) of the steep slope surface 22 of the hopper 11. A tilt angle and a surface shape of the helical blade 13B, a pitch of the helical blade 13B in the axis direction, and a rotation direction of the rotation shaft 13A are set such that the powder P is transported toward the discharge port 15 in a case where the blade 13B is rotated about the shaft.

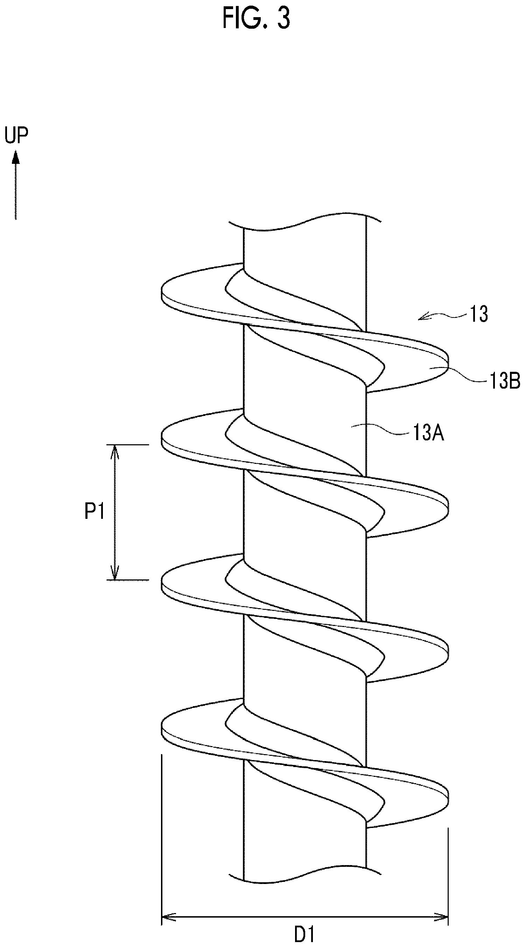

In the auger screw 13, a pitch of the blade 13B is set as P1 and an outer diameter of the blade 13B is set as D1 (refer to Fig. 3). The positional relationship between the hopper 11 and the auger screw 13 will be described later.

The driving unit 14 is a motor that rotates the rotation shaft 13A of the auger screw 13 and rotationally drives the auger screw 13. In a case where the auger screw 13 is rotated, the powder P present in the hopper 11 is discharged in the direction of the discharge unit 12, and the powder P present in the discharge unit 12 is transported toward the discharge port 15.

As described above, the auger screw 13 is provided to stabilize the discharge amount of the powder P per unit time. In a case where a gap between the blade 13B and the inner wall surface of the discharge unit 12 is large, for example, the small particles SP fall from the gap. Then, the discharge amount of the powder P is not stable. For this reason, it is preferable that the gap between the distal end of the blade 13B of the auger screw 13 and the inner wall surface of the discharge unit 12 is equal to or less than the average particle diameter of the small particles SP. As a result, the small particles SP are prevented from falling from the gap between the blade 13B of the auger screw 13 and the inner wall surface of the discharge unit 12. The distal end of the blade 13B of the auger screw 13 is a portion corresponding to an outer edge (that is outer diameter D1) of the auger screw 13 in a direction of the diameter illustrated in Fig. 3.

In this example, the rotation shaft 13A of the auger screw 13 extends in the vertical direction. The diameter of the inner wall surface of the discharge unit 12 is also the same from the upper end to the lower end of the discharge unit 12, and the inner wall surface of the discharge unit 12 and the rotation shaft 13A of the auger screw 13 are parallel to each other.

### (Positional relationship between hopper and auger screw)

It is preferable that the positional relationship between the hopper 11 and the auger screw 13 is set as follows. It is preferable that at least one of a condition in which a height H2 (refer to Fig. 2) of the second gentle slope surface 24 of the hopper 11 in the rotation axis direction of the auger screw 13 is 1.5 times or more the pitch P1 of the blade 13B, a condition in which a height H1 (refer to Fig. 2) of the steep slope surface 22 of the hopper 11 in the rotation axis direction of the auger screw 13 is 1 times or more the pitch P1 of the blade 13B of the auger screw 13, or a condition in which an inner diameter ID2 (refer to Fig. 2) of the upper end of the steep slope surface 22 is 1.7 times or more the outer diameter D1 of the blade 13B of the auger screw 13 is satisfied. In the first embodiment, the inner diameter ID2 of the upper end of the steep slope surface 22 is equal to the inner diameter of the boundary portion 23.

For example, the height H2 of the second gentle slope surface 24 in the rotation axis direction of the auger screw 13 is set to be about 1.7 times the pitch P1 of the blade 13B. For example, the height H1 of the steep slope surface 22 in the rotation axis direction of the auger screw 13 is set to be about 2 times the pitch P1 of the blade 13B of the auger screw 13. For example, the inner diameter ID2 of the upper end of the steep slope surface 22 is set to be about 2 times the outer diameter D1 of the blade 13B of the auger screw 13.

In addition, it is preferable that the difference between the inner diameter ID2 of the upper end of the steep slope surface 22 and the outer diameter D1 of the blade 13B of the auger screw 13 satisfies a condition of being 5 times or more the average particle diameter of the powder P. Here, the average particle diameter of the powder P compared with the difference between the inner diameter ID2 and the outer diameter D1 is the average particle diameter of all particles included in the powder P as illustrated in Fig. 10B. In the first embodiment, since the powder P includes the small particles SP and the large particles LP, the average particle diameter of all the particles included in the powder P approaches the average particle diameter of particles (large particles LP in the example of Fig. 10B) that are included in large quantities. Note that, in the first embodiment, the powder P has a multimodal distribution, but even in a case where the powder P having an unimodal distribution is used, the technology of the present disclosure can be applied.

Here, in this example, the average particle diameter of the powder P can be obtained using an image analysis method based on JISZ 8827-1. Specifically, particles dispersed on a stage are imaged and a two-dimensional projection image is acquired to calculate an equivalent circle diameter of the particle. An arithmetic mean value of equivalent circle diameters of all the imaged particles is taken. For example, the arithmetic mean value can be measured using Morphologi G3 that is a particle image analyzer manufactured by Malvern Panalytical Ltd.

For example, the difference between the inner diameter ID2 of the upper end of the steep slope surface 22 and the outer diameter D1 of the blade 13B of the auger screw 13 is set to be about 8 times the average particle diameter of the powder P.

### (Container)

As shown in Fig. 1, the container 16 has a box shape of which an upper portion is open, and is disposed below the discharge port 15. As a result, the container 16 is filled with the powder P discharged from the discharge port 15.

### (Measuring unit)

The measuring unit 17 includes a body part 17A, and a saucer 17B which is disposed on the upper portion of the body part 17A and on which the container 16 is placed. The body part 17A measures the mass of the container 16 placed on the saucer 17B and the powder P to measure the filling amount of the powder P with which the container 16 is filled.

### (Control unit)

The control unit 18 is electrically connected to the measuring unit 17, and the filling amount of the powder P output from the measuring unit 17 is input to the control unit 18. In addition, the control unit 18 is electrically connected to the driving unit 14, and controls the driving unit 14 according to the filling amount of the powder P to control the rotation of the auger screw 13. In the powder supply device 10, for example, a measured value obtained during filling, which is output from the measuring unit 17, is fed back to the control unit 18, and the rotational speed of the auger screw 13 is reduced on the basis of the measured value or the stop time of the auger screw 13 is controlled on the basis of the measured value.

### (Actions and effects)

Next, the actions and effects of the present embodiment will be described.

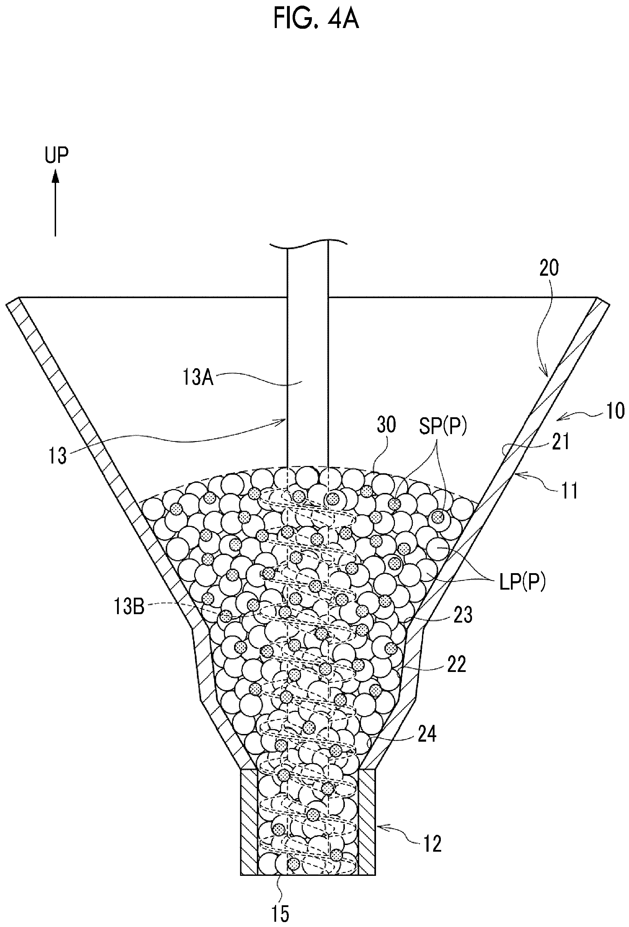

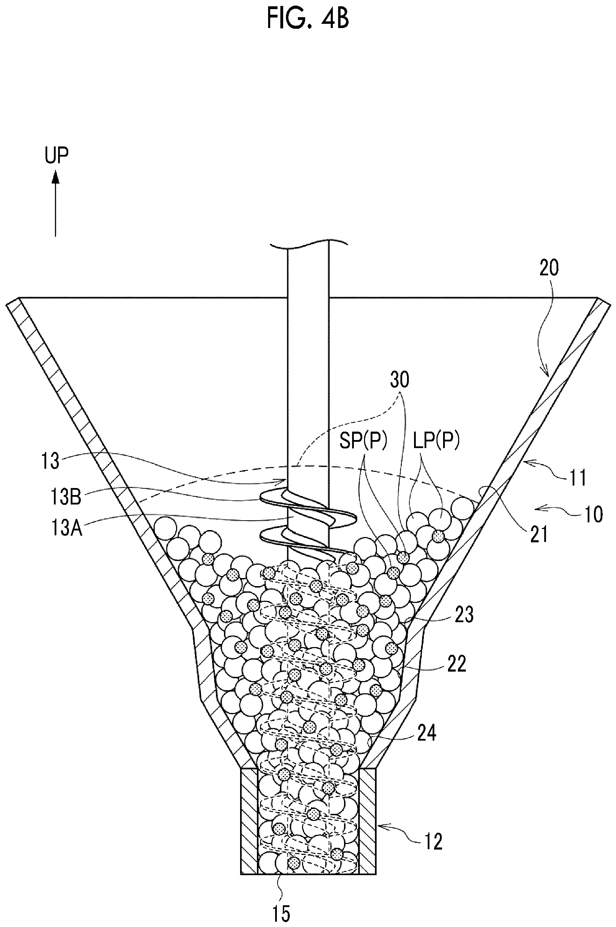

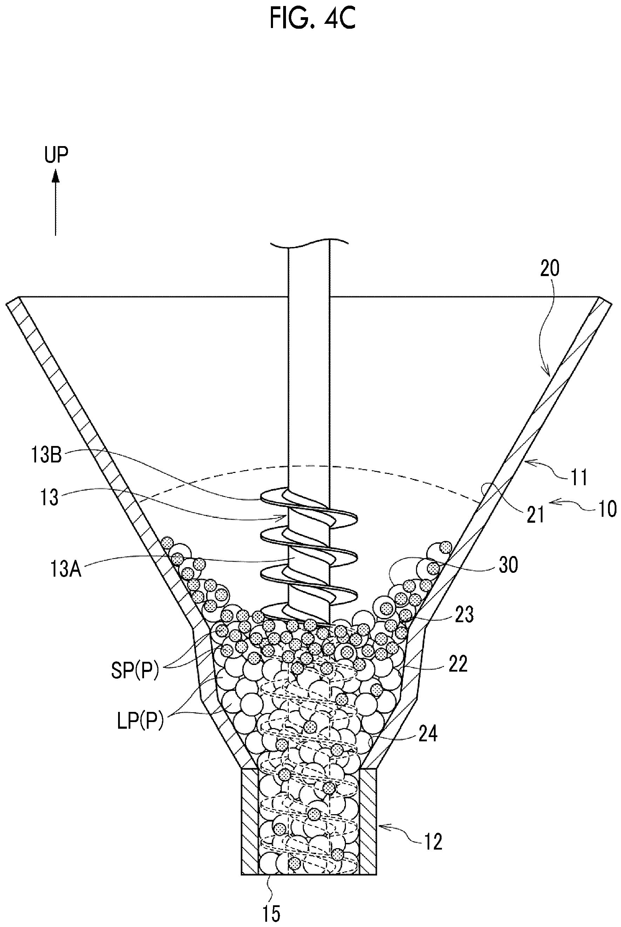

As illustrated in Figs. 4A to 4C, in the powder supply device 10, the powder P accommodated in the hopper 11 is supplied from the lower end part 11B of the hopper 11 to the discharge unit 12 by the rotation of the auger screw 13. As described above, the powder P in the present example has a distribution in at least the particle diameter, and the powder P includes the large particles LP having a relatively large particle diameter and the small particles SP having a relatively small particle diameter. Fig. 4A illustrates a residual amount of the powder P in the hopper 11 at the initial stage of the start of the supply in which the supply of the powder P starts, and Figs. 4B and 4C illustrate a state in which the residual amount of the powder P is gradually decreased as the supply of the powder P progresses.

In a case where the powder P is a mixture of a plurality of types of powder, particularly in a case where the residual amount of the powder P is small as illustrated in Fig. 4C, the segregation of the powder P often occurs in the hopper 11. In the powder supply device 10 of the present example, even in a case where the powder P is a mixture of a plurality of types of powder, the hopper 11 has one boundary portion 23 that changes from the first gentle slope surface 21 to the steep slope surface 22, and therefore, the segregation of the powder P occurring in the hopper 11 can be suppressed. The reason is as follows.

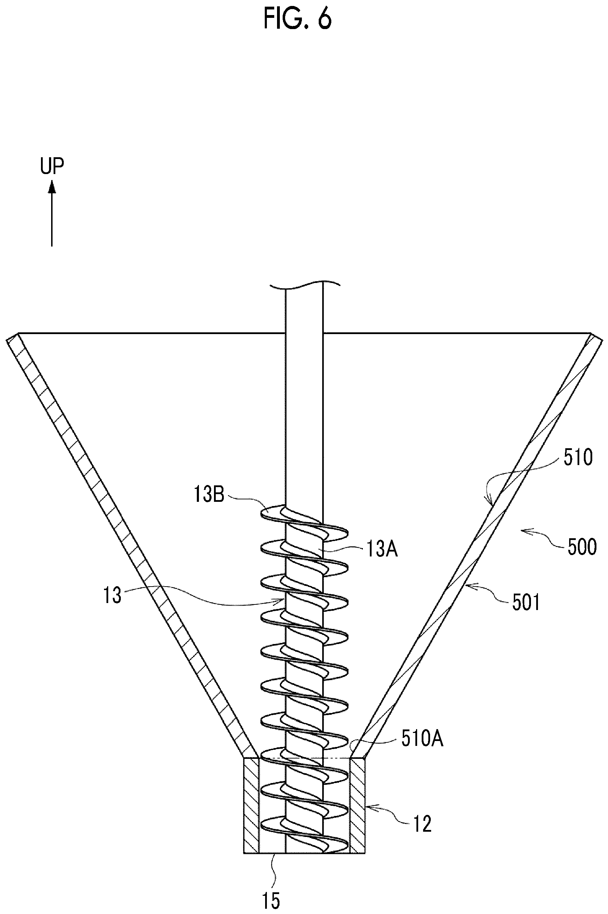

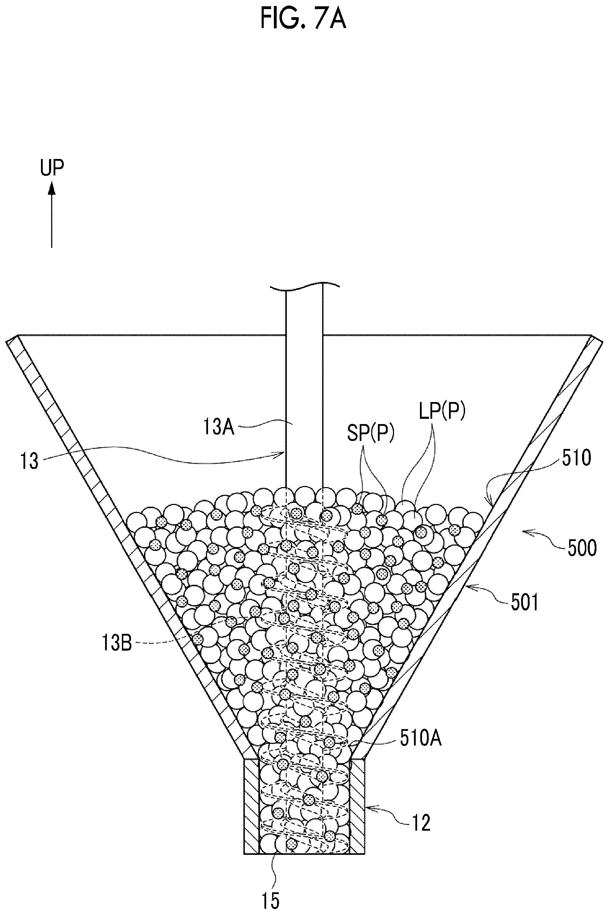

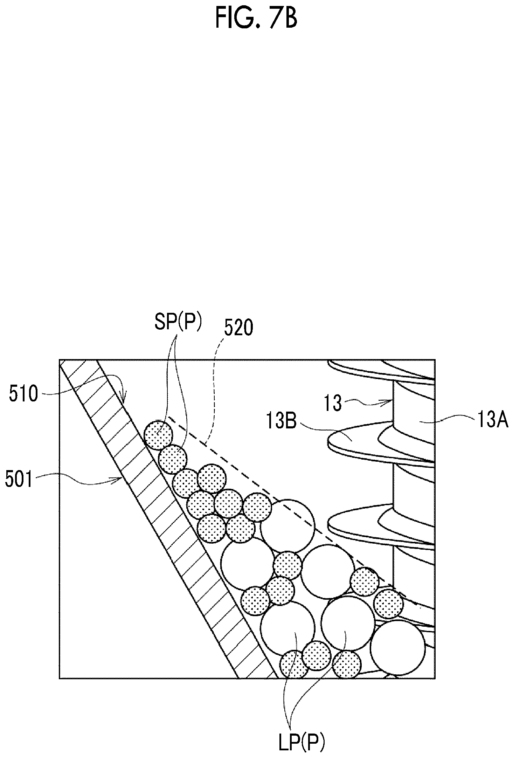

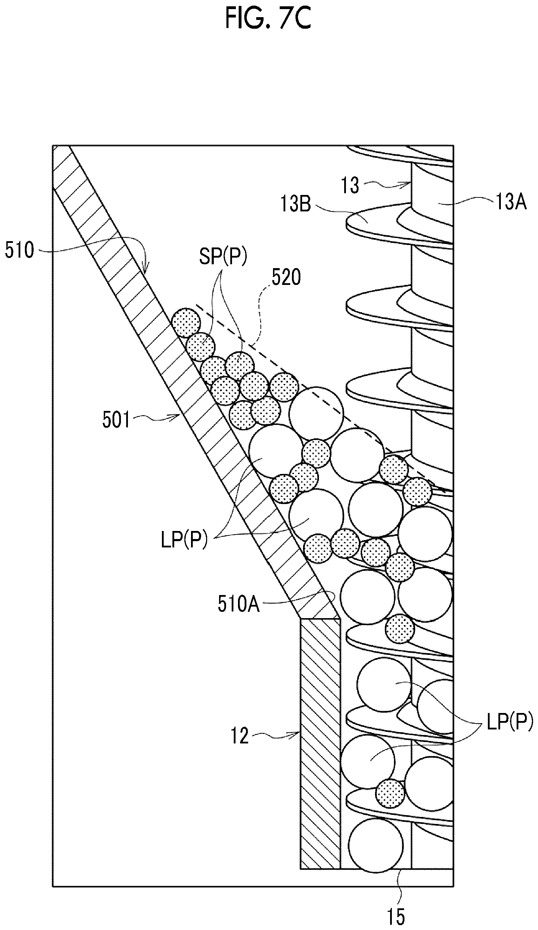

Here, before the actions and the effects of the powder supply device 10 according to the first embodiment are specifically described, a powder supply device according to a first comparative example to be compared with the first embodiment will be described. The first comparative example is illustrated in Figs. 6 and 7 (including Fig. 7A to Fig. 7C). The difference between the first embodiment illustrated in Figs. 1 to 5D and the first comparative example illustrated in Figs. 6 to 7C is only in the shape of the hopper. Note that, in a case where the first comparative example has the same components, members, and the like as those of the first embodiment, the components, members, and the like will be denoted by the same reference numerals as the reference numerals used in the first embodiment and the detailed description thereof will be omitted.

As illustrated in Fig. 6, in a powder supply device 500 of the first comparative example, a hopper 501 has an inner wall surface 510 that is formed in a funnel shape of which the inner diameter is decreased downward and that is inclined at a constant tilt angle with respect to the horizontal direction. A lower end part 510A of the inner wall surface 510 of the hopper 501 is connected to the discharge unit 12. That is, on the inner wall surface 510 of the hopper 501 of the first comparative example illustrated in Fig. 6, unlike the hopper 11 according to the first embodiment illustrated in Fig. 2, the first gentle slope surface 21 and the steep slope surface 22 that have different tilt angles and the boundary portion 23 where the inclinations of the first gentle slope surface 21 and the steep slope surface 22 change are not provided.

As illustrated in Fig. 7A, in the powder supply device 500 of the first comparative example, in a case where the amount of the powder P accommodated in the hopper 501 is large as in the initial stage of the start of the supply in which the supply of the powder P starts, the large particles LP and the small particles SP in the powder P are almost evenly dispersed. In a case where the amount of the powder P is large, the deposition surface formed by the powder P accommodated in the hopper 501 is raised at the central portion of the hopper 501 than at the outer side as illustrated in Fig. 7A or is maintained at a substantially constant height from the central portion of the hopper 501 toward the outer side. That is, the deposition surface refers to an outer surface of a lump of the powder P in a case where the entire powder P deposited in the hopper 501 is viewed as a lump. In a case where the residual amount of the powder P is large as illustrated in Fig. 7A, in a case where the deposition surface is seen in a cross-sectional view, for example, the shape of the deposition surface is a chevron shape of which the central portion is convex, or the height in the horizontal direction is substantially constant.

In a case where, from the state of Fig. 7A, the supply of the powder P in the hopper 501 progresses by the rotation of the auger screw 13 and a part of the powder P in the hopper 501 is supplied to the discharge unit 12, the powder P around the auger screw 13 is discharged. For this reason, as seen in a cross-sectional view, the deposition surface of the powder P has a recess shape in which the vicinity of the center is recessed. That is, in a case where the supply of the powder P in the hopper 501 progresses and the residual amount of the powder P is decreased, the deposition surface of the powder P has a shape in which the central portion where the auger screw 13 is disposed is lowest and which becomes higher toward the outer side.

As illustrated in Fig. 7B, in a case where the residual amount of the powder P in the hopper 501 is further reduced, the inner wall surface 510 of the hopper 501 is inclined at a certain tilt angle, and therefore, in the vicinity of the lower portion of the inner wall surface 510, a deposition surface 520 of the powder P is also formed at a certain tilt angle with respect to the horizontal direction. In this case, the tilt angle of the deposition surface 520 of the powder P with respect to the horizontal direction is smaller than the tilt angle of the inner wall surface 510 with respect to the horizontal direction. In a case where the deposition surface 520 of the powder P is at a certain tilt angle, the particles that are likely to roll (for example, large particles LP) roll toward the central portion of the auger screw 13 along the inclination of the deposition surface 520 before the particles that are relatively difficult to roll (for example, small particles SP).

As illustrated in Fig. 7C, the large particles LP that reach the vicinity of the auger screw 13 first are discharged to the discharge unit 12 first, while the small particles SP are left in the vicinity of the inner wall surface 510 of the hopper 501. As a result, segregation of the powder P occurs. In a case where segregation of the powder P occurs, a ratio (a mixing ratio of the large particles LP and the small particles SP) of the particle diameters of the powder P supplied from the discharge port 15 of the discharge unit 12 to the container is changed compared to the ratio of the particle diameters at the initial stage of the start of the supply.

Next, the actions and effects of the powder supply device 10 according to the first embodiment will be described more specifically.

Also in the first embodiment, as illustrated in Fig. 4A, in a case where the amount of the powder P accommodated in the hopper 11 is large as in the initial stage of the start of the supply in which the supply of the powder P starts, the large particles LP and the small particles SP in the powder P are almost evenly dispersed. The state of a deposition surface 30 illustrated in Fig. 4A of the first embodiment is substantially the same as the state of the deposition surface illustrated in Fig. 7A of the first comparative example.

In a case where, from the state of Fig. 4A, the supply of the powder P in the hopper 11 progresses by the rotation of the auger screw 13 and a part of the powder P in the hopper 11 is supplied to the discharge unit 12, the powder P around the auger screw 13 starts to be decreased, and the deposition surface 30 of the powder P has a recess shape in which the vicinity of the center is recessed in a cross-sectional view, as illustrated in Fig. 4B. That is, in a case where the supply of the powder P in the hopper 501 progresses and the residual amount of the powder P is decreased, the deposition surface of the powder P has a shape in which the central portion where the auger screw 13 is disposed is lowest and which becomes higher toward the outer side.

Then, in a case where the powder P in the hopper 11 is further supplied to the discharge unit 12 and the residual amount of the powder P in the hopper 11 is further reduced as illustrated in Fig. 4C, segregation of the powder P in the hopper 11 occurs in the vicinity of the lower portion side of the first gentle slope surface 21. That is, the small particles SP and the large particles LP of the powder P are biased without being evenly dispersed.

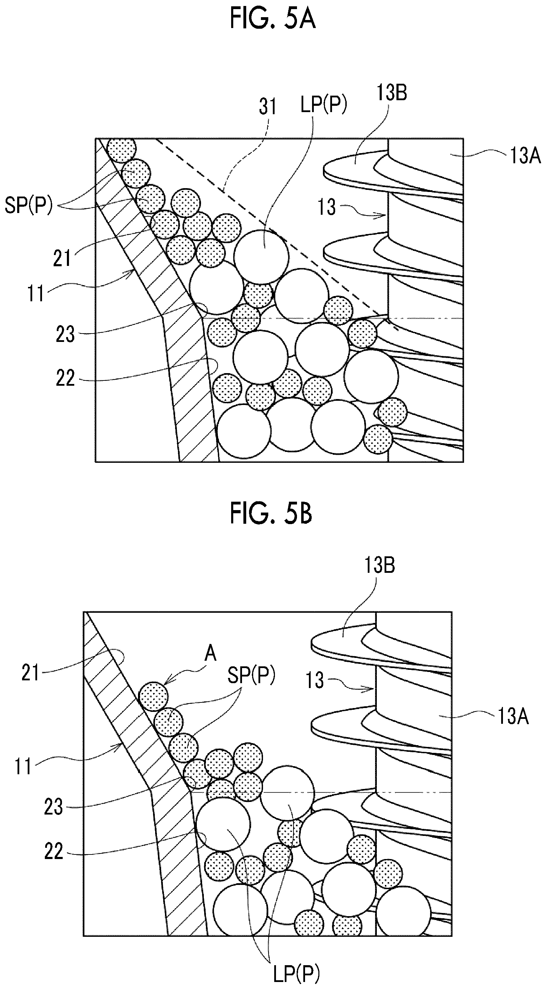

More specifically, as illustrated in Fig. 5A, in a case where the residual amount of the powder P in the hopper 11 is small, since the first gentle slope surface 21 of the hopper 11 has a certain tilt angle with respect to the horizontal direction, a deposition surface 31 of the powder P is also formed at a certain tilt angle in the vicinity of the lower portion of the first gentle slope surface 21. In a case where the deposition surface 31 of the powder P is at a certain tilt angle, the particles that are likely to roll (for example, large particles LP) roll toward the central portion of the auger screw 13 along the inclination of the deposition surface 31 before the particles that are relatively difficult to roll (for example, small particles SP), as illustrated in Fig. 5B. The large particles LP that first reach the vicinity of the auger screw 13 roll and fall first, while the small particles SP are left in the vicinity of the first gentle slope surface 21 of the hopper 11 (refer to the vicinity of arrow A), so that segregation of the powder P occurs.

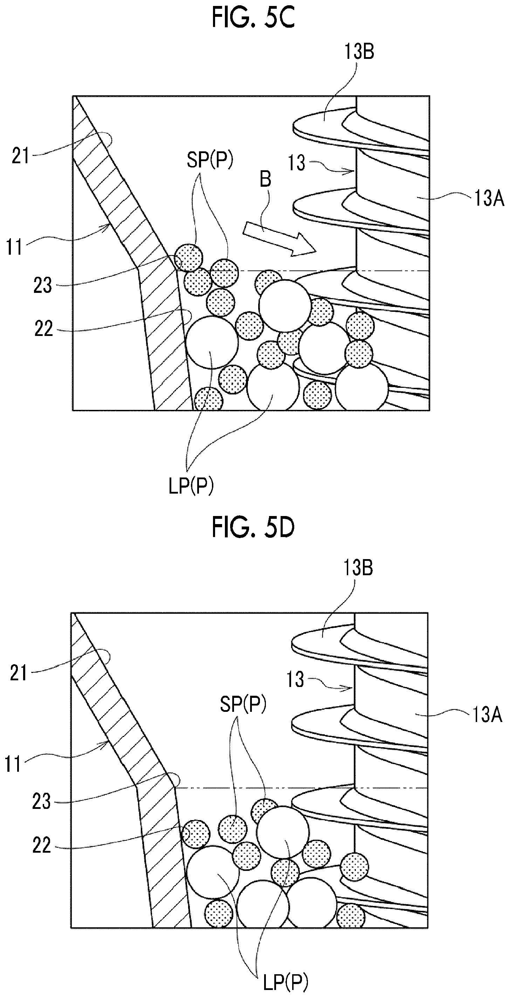

The inner wall surface 20 of the hopper 11 according to the first embodiment has one boundary portion 23 that changes from the first gentle slope surface 21 positioned relatively upward to the steep slope surface 22 positioned relatively downward. As a result, due to the change of the inclination from the first gentle slope surface 21 to the steep slope surface 22, a certain inclination state of the deposition surface 31 of the powder P collapses, and a gap between the large particles LP is increased. Then, as illustrated in Fig. 5C, a phenomenon occurs in which the small particles SP left in the vicinity of the first gentle slope surface 21 of the hopper 11 move toward the auger screw 13 like an avalanche from the gaps between the large particles LP, as indicated by arrow B.

As a result, as illustrated in Fig. 5D, even in a case where the residual amount of the powder P in the hopper 11 is small, segregation of the powder P in the vicinity of the auger screw 13 is suppressed. The powder P of which segregation is suppressed is supplied to the discharge unit 12, and is transported toward the discharge port 15 by the auger screw 13. As illustrated in Fig. 4A, segregation of the powder P is less likely to occur in the initial stage of the start of the supply in which the residual amount of the powder P in the hopper 11 is large, and as illustrated in Fig. 4C, segregation of the powder P is likely to occur in a case where the residual amount of the powder P is reduced. In a case where the hopper 11 is formed in the shape as in the first embodiment, a temporal change of the proportion of the small particles SP and the large particles LP in the powder P supplied to the container 16 is suppressed from the initial stage of the start of the supply of the powder P to the end stage so that a variation in quality of each container 16 filled with the powder P is suppressed.

In addition, in the powder supply device 10 according to the first embodiment, the second gentle slope surface 24 having a gentler inclination than the steep slope surface 22 is provided between the steep slope surface 22 and the upper end of the discharge unit 12, and the second gentle slope surface 24 of the hopper 11 and the discharge unit 12 are connected to each other.

As described above, since the second gentle slope surface 24 is provided between the steep slope surface 22 and the discharge unit 12 in the powder supply device 10 according to the first embodiment, an interval between the steep slope surface 22 and the blade 13B of the auger screw 13 in a lateral direction (direction orthogonal to the rotation shaft 13A) can be widened as compared with a case where the second gentle slope surface 24 is not provided. For example, as illustrated in Fig. 5C, it is considered that segregation of the powder P is eliminated by the particles that are difficult to roll (for example, small particles SP) falling into the gaps between the particles that are likely to roll (for example, large particles LP). For this reason, in a case where the interval between the steep slope surface 22 and the blade 13B of the auger screw 13 is wide, for example, the small particles SP are likely to enter the gaps between the large particles LP that have previously entered the section of the steep slope surface 22. As a result, the entrance of the small particles SP to the section of the steep slope surface 22 progresses, and the small particles SP and the large particles LP are likely to be mixed in the section of the steep slope surface 22. As a result, a segregation-suppressing effect is improved. Then, the powder P, in which the small particles SP and the large particles LP are mixed and segregation is suppressed, is transported toward the auger screw 13 and toward the discharge port 15.

In addition, in the powder supply device 10 according to the first embodiment, the upper end (the boundary portion 23 in the first embodiment) of the blade 13B of the auger screw 13 is disposed above the lower end of the steep slope surface 22.

As a result, in the powder supply device 10, the particles that are difficult to roll (for example, small particles SP) are moved from the outer side to the central portion of the hopper 11 due to the change from the first gentle slope surface 21 to the steep slope surface 22. The segregation is suppressed by the movement of the small particles SP, but in a case where the auger screw 13 for transporting the powder P is disposed in the vicinity of the movement destination of the small particles SP, the powder P in a state where the segregation is suppressed can be sent to the auger screw 13. Therefore, in the powder supply device 10 according to the first embodiment, the segregation-suppressing effect is improved.

In the above-described configuration of the powder supply device 10, for example, in a case where the upper end of the blade 13B of the auger screw 13 is disposed below the lower end of the steep slope surface 22, after segregation of the powder P is suppressed once, segregation may progress again between the lower end of the steep slope surface 22 and the auger screw 13 in some cases.

For this reason, it is preferable that the positional relationship between the upper end of the blade 13B of the auger screw 13 and the lower end of the steep slope surface 22 in the height direction is the above-described configuration.

In addition, in the powder supply device 10 according to the first embodiment, at least one of a condition in which the height H2 of the second gentle slope surface 24 of the hopper 11 in the rotation axis direction of the auger screw 13 is 1.5 times or more the pitch P1 of the blade 13B, a condition in which the height H1 of the steep slope surface 22 of the hopper 11 in the rotation axis direction of the auger screw 13 is 1 times or more the pitch P1 of the blade 13B of the auger screw 13, or a condition in which the inner diameter ID2 of the upper end of the steep slope surface 22 is 1.7 times or more the outer diameter D1 of the blade 13B of the auger screw 13 is satisfied.

For this reason, in the powder supply device 10, the interval between the second gentle slope surface 24 or the steep slope surface 22 and the auger screw 13 in the lateral direction is wider than the interval between the discharge unit 12 and the auger screw 13 in the lateral direction (direction orthogonal to the rotation shaft 13A). In a case where the interval between the second gentle slope surface 24 or the steep slope surface 22 and the auger screw 13 is relatively wide, for example, the small particles SP entering the steep slope surface 22 or the second gentle slope surface 24 are likely to move toward the auger screw 13. As a result, segregation of the powder P is on its way to being eliminated or the progress of segregation is suppressed. By setting the height H2 of the second gentle slope surface 24 in the up-down direction to 1.5 times or more the pitch P1 of the blade 13B, or by setting the height H1 of the steep slope surface 22 in the up-down direction to 1 times or more the pitch P1 of the blade 13B, the section in the up-down direction where segregation of the powder P is suppressed can be made longer as compared to a case where the height thereof is set to be smaller than the above-mentioned height, and thus the segregation-suppressing effect is improved.

In addition, by satisfying the condition in which the inner diameter ID2 of the upper end of the steep slope surface 22 is 1.7 times or more the outer diameter D1 of the blade 13B of the auger screw 13, the interval between the steep slope surface 22 and the auger screw 13 in the lateral direction is relatively wide, and therefore, the same segregation-suppressing effect as described above can be expected.

In addition, in the powder supply device 10, the difference between the inner diameter ID2 of the upper end of the steep slope surface 22 and the outer diameter D1 of the blade 13B of the auger screw 13 satisfies the condition of being 5 times or more the average particle diameter of the powder P.

For this reason, in the powder supply device 10, since an interval at which the powder P is likely to move can be ensured as the interval between the steep slope surface 22 and the auger screw 13 in the lateral direction, the segregation-suppressing effect is improved as compared with a case where the difference is less than 5 times the average particle diameter of the powder P. Note that, in the first embodiment, the powder P having a multimodal distribution is used. However, for example, the same effect as that of the first embodiment can be obtained even in a case where the powder P having a unimodal distribution is used.

### (Verification of influence of shape of hopper on powder)

An experiment of continuously filling the powder P using the powder supply device 10 according to the first embodiment and acquiring the proportion of the small particles SP of the powder P in the hopper 11 was performed. In this experiment, in order to verify the influence of the presence or absence of the steep slope surface 22 and the boundary portion 23 of the hopper 11 on the powder P, the proportion of the small particles SP of the powder P in the hopper 501 of the powder supply device 500 of the first comparative example was acquired. The experiment was conducted under the same conditions as the actual machine by using the actual machine or solving numerically.

### Conditions of the powder P used are described below.

The average particle diameter of the large particles LP in the powder P is 1.0 mm, the proportion of the small particles SP at the initial stage is 10%, and the average particle diameter of the small particles SP is 0.5 mm. In addition, the bulk density of the powder P is 0.2 g/cc.

In this experiment, a case where the proportion of the small particles SP is monotonically increased and deviates greatly from the initial proportion (about 10% in this example) was evaluated as "segregation", a case where the proportion of the small particles SP finally became equal to the initial proportion was evaluated as "elimination" of segregation, or a case where the proportion of the small particles SP is finally slightly increased from the initial proportion was evaluated as "stagnation" of segregation.

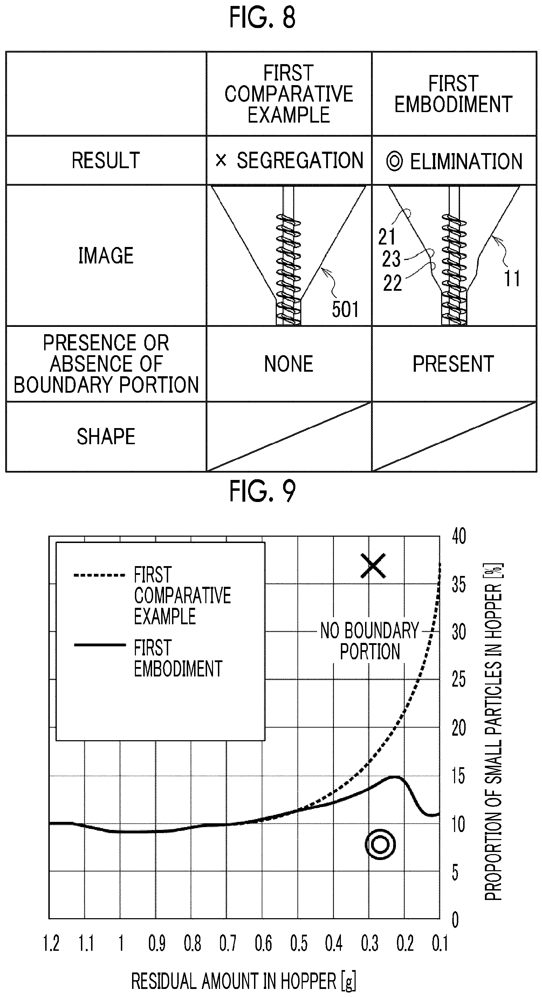

Fig. 8 is a diagram illustrating conditions and results of an experiment conducted to investigate a status of segregation of the powder P in the powder supply device 10 according to the first embodiment and the powder supply device 500 of the first comparative example. In addition, Fig. 9 is a graph illustrating a relationship between the residual amount of the powder P in the hopper and the proportion of the small particles SP in the hopper in the powder supply device 10 according to the first embodiment and the powder supply device 500 of the first comparative example.

As illustrated in Figs. 8 and 9, it is confirmed that, in the powder supply device 500 of the first comparative example, the segregation of the powder P in the hopper 501 rapidly progresses from a time at which the residual amount in the hopper 501 is about half of the amount at the initial stage of the start of the supply, while in the powder supply device 10 according to the first embodiment, the segregation of the powder P in the hopper 11 is eliminated and substantially the same distribution is maintained from the initial stage of the start of the supply to the end stage.

### [Second embodiment]

Next, a powder supply device of a second embodiment will be described. Note that, in a case where the second embodiment has the same components, members, and the like as those of the first embodiment, the components, members, and the like will be denoted by the same reference numerals as the reference numerals used in the first embodiment and the detailed description thereof will be omitted.

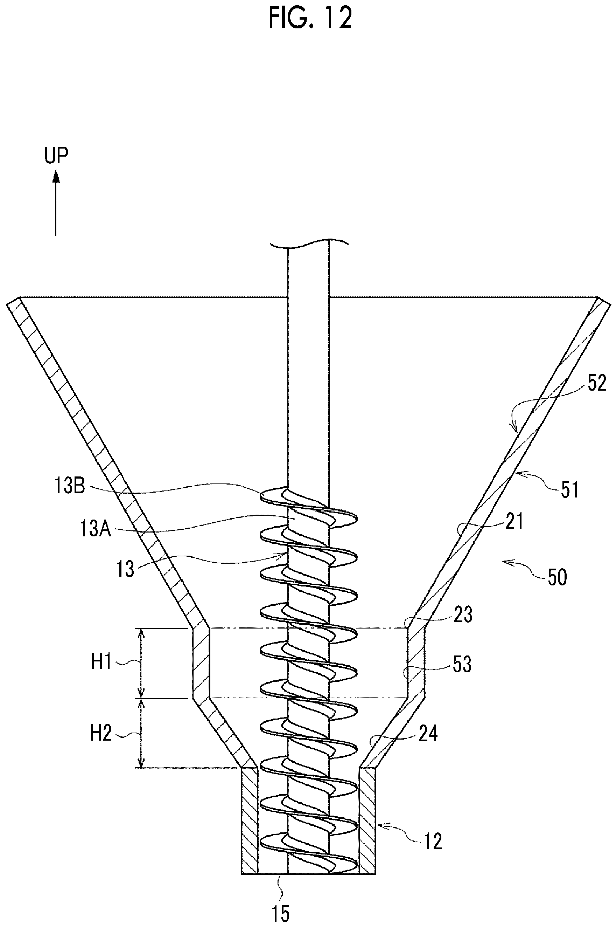

Fig. 12 illustrates a configuration of a hopper 51 used in a powder supply device 50 according to the second embodiment. As illustrated in Fig. 12, an inner wall surface 52 of the hopper 51 has one first gentle slope surface 21, one steep slope surface 53 that is positioned below the first gentle slope surface 21 and has a relatively steep tilt angle with respect to the horizontal direction, and one boundary portion 23 that changes from the first gentle slope surface 21 to the steep slope surface 53. The second gentle slope surface 24 having a gentler inclination than the steep slope surface 53 is provided between the steep slope surface 53 of the inner wall surface 52 of the hopper 51 and the upper end of the discharge unit 12.

The steep slope surface 53 is substantially parallel to the rotation shaft 13A of the auger screw 13. In other words, a portion of the hopper 51 where the steep slope surface 53 is provided has a cylindrical shape. As an example, the height of the steep slope surface 53 in the rotation axis direction of the auger screw 13 is 6 mm, and the height of the second gentle slope surface 24 in the rotation axis direction of the auger screw 13 is 6 mm.

Note that configurations other than the above-described configuration are similar to those of the powder supply device 10 according to the first embodiment.

In the powder supply device 50 according to the second embodiment, the following effect is obtained in addition to the effects obtained from the same configuration as the configuration of the powder supply device 10 according to the first embodiment.

The steep slope surface 53 is substantially parallel to the rotation shaft 13A of the auger screw 13. As a result, in the powder supply device 50, the tilt angle of the steep slope surface 53 with respect to the horizontal direction becomes steep, and a change in the tilt angle of the steep slope surface 53 with respect to the first gentle slope surface 21 becomes relatively large. Therefore, the movement of the powder P (for example, small particles SP) that is difficult to roll progresses, and the segregation-suppressing effect is improved.

### (Verification of influence of shape of hopper on powder)

An experiment of continuously filling the powder P using the powder supply device 50 according to the second embodiment and acquiring the proportion of the small particles SP of the powder P in the hopper 51 was performed. The conditions of the powder P used are similar to those in the case of the powder supply device 10 according to the first embodiment.

In this experiment, the height H1 of the steep slope surface 53 in the rotation axis direction of the auger screw 13 is 6 mm, and the height H2 of the second gentle slope surface 24 in the rotation axis direction of the auger screw 13 is 6 mm. In addition, the outer diameter D1 of the blade 13B of the auger screw 13 is 8 mm, and the pitch P1 of the blade 13B is 3 mm.

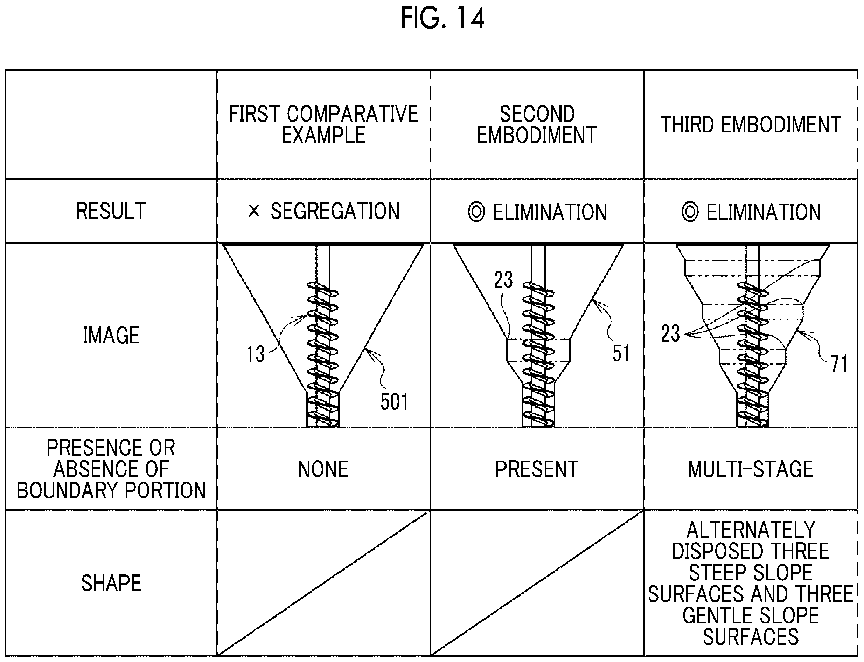

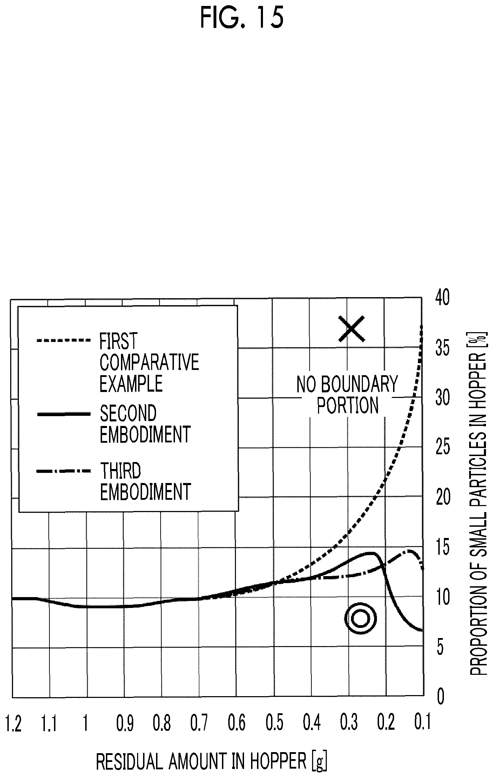

Fig. 14 illustrates conditions and results of an experiment conducted to investigate a status of segregation of the powder P in the powder supply device 50 according to the second embodiment and the powder supply device 500 of the first comparative example. In addition, Fig. 15 illustrates a graph of a relationship between the residual amount of the powder P in the hopper and the proportion of the small particles SP in the hopper in the powder supply device 50 according to the second embodiment and the powder supply device 500 of the first comparative example. As illustrated in Figs. 14 and 15, it is confirmed that, in the powder supply device 500 of the first comparative example, the segregation of the powder P in the hopper 501 progresses, while in the powder supply device 50 according to the second embodiment, the segregation of the powder P in the hopper 11 is eliminated and substantially the same distribution is maintained from the initial stage of the start of the supply to the end stage.

### [Third embodiment]

Next, a powder supply device of a third embodiment will be described. Note that, in a case where the third embodiment has the same components, members, and the like as those of the first and second embodiments, the components, members, and the like will be denoted by the same reference numerals as the reference numerals used in the first and second embodiments and the detailed description thereof will be omitted.

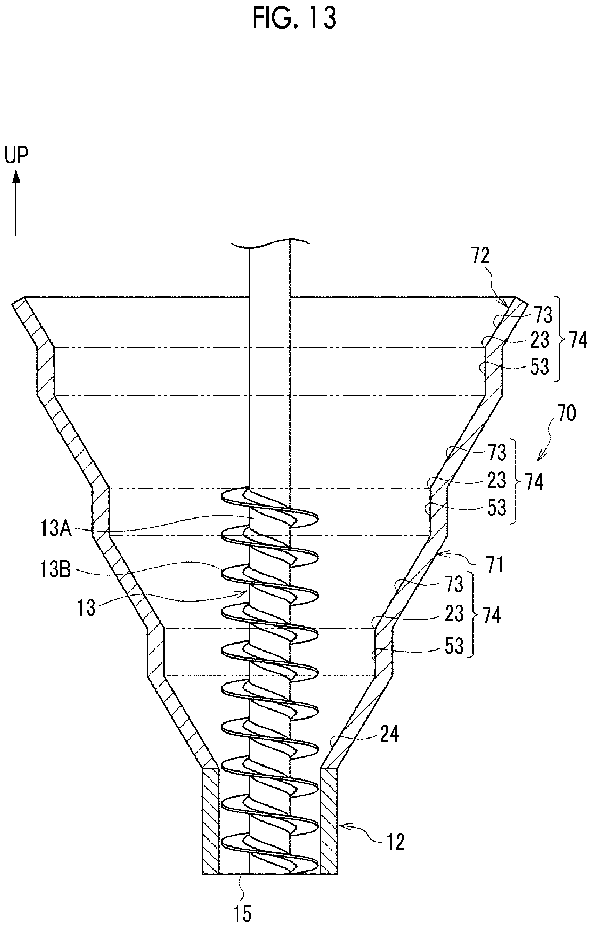

Fig. 13 illustrates a configuration of a hopper 71 used in a powder supply device 70 according to the third embodiment. As illustrated in Fig. 13, an inner wall surface 72 of the hopper 71 has a gentle slope surface 73 that has a relatively gentle tilt angle with respect to the horizontal direction, the steep slope surface 53 that is positioned below the gentle slope surface 73 and has a relatively steep tilt angle with respect to the horizontal direction, and the boundary portion 23 that changes from the gentle slope surface 73 to the steep slope surface 53. In the third embodiment, a plurality of (for example, three) sets 54 of the gentle slope surface 73, the boundary portion 23, and the steep slope surface 53 are formed in the up-down direction of the hopper 71.

The second gentle slope surface 24 having a gentler inclination than the steep slope surface 53 is provided between the steep slope surface 53 at the lowermost portion of the inner wall surface 52 of the hopper 51 and the upper end of the discharge unit 12.

Note that configurations other than the above-described configuration are similar to those of the powder supply device 10 according to the first embodiment and the powder supply device 50 according to the second embodiment.

In the powder supply device 70 according to the third embodiment, the following effect is obtained in addition to the effects obtained from the same configuration as the configuration of the powder supply device 10 according to the first embodiment and the configuration of the powder supply device 50 according to the second embodiment.

In the powder supply device 70, since a plurality of (for example, three) sets 54 of the gentle slope surface 73, the boundary portion 23, and the steep slope surface 53 are formed in the up-down direction of the hopper 71, the segregation-suppressing effect is further improved.

### (Verification of influence of shape of hopper on powder)

An experiment of continuously filling the powder P using the powder supply device 70 according to the third embodiment and acquiring the proportion of the small particles SP of the powder P in the hopper 71 was performed. The conditions of the powder P used are similar to those in the case of the powder supply device 10 according to the first embodiment.

Fig. 14 illustrates conditions and results of an experiment conducted to investigate a status of segregation of the powder P in the powder supply device 70 according to the third embodiment, the powder supply device 50 according to the second embodiment, and the powder supply device 500 of the first comparative example. In addition, Fig. 15 illustrates a graph of a relationship between the residual amount of the powder P in the hopper and the proportion of the small particles SP in the hopper in the powder supply device 70 according to the third embodiment, the powder supply device 50 according to the second embodiment, and the powder supply device 500 of the first comparative example.

As illustrated in Figs. 14 and 15, it is confirmed that, in the powder supply device 500 of the first comparative example, the segregation of the powder P in the hopper 501 progresses, while in the powder supply device 70 according to the third embodiment, the segregation of the powder P in the hopper 71 is eliminated and substantially the same distribution is maintained from the initial stage of the start of the supply to the end stage. In addition, in the powder supply device 70 according to the third embodiment, it can be seen that, even in a case where the residual amount of the powder P in the hopper is large compared to the powder supply device 50 according to the second embodiment, substantially the same distribution of the powder P is maintained.

### [Fourth to sixth embodiments]

Next, powder supply devices according to fourth to sixth embodiments will be described. In a case where the fourth to sixth embodiments have the same components, members, and the like as those of the first to third embodiments, the components, members, and the like will be denoted by the same reference numerals as the reference numerals used in the first to third embodiments and the detailed description thereof will be omitted.

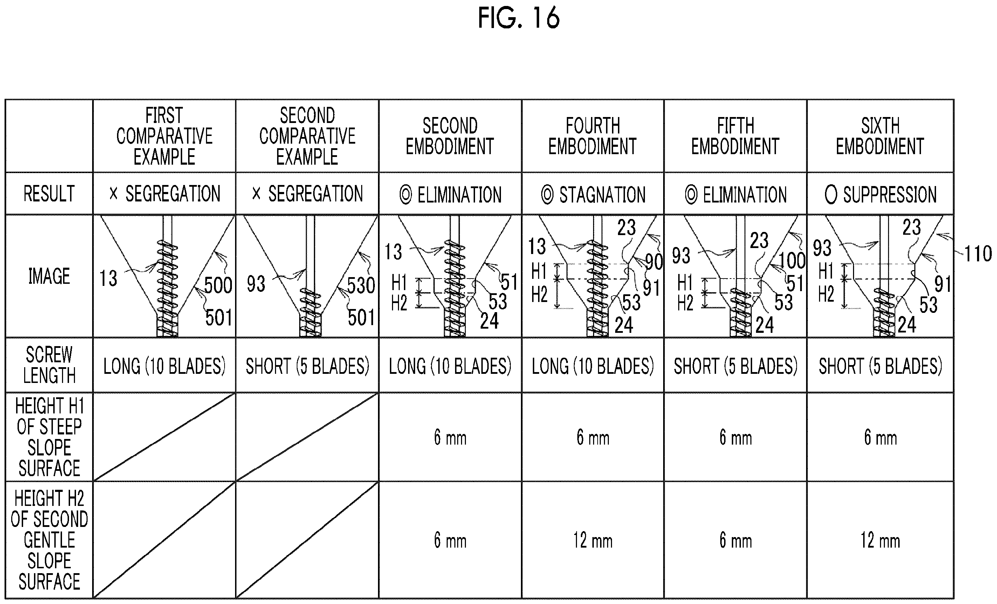

Fig. 16 illustrates conditions and results of an experiment conducted to investigate a status of segregation of the powder P in the powder supply device 50 according to the second embodiment, powder supply devices 90, 100, and 110 according to the fourth to sixth embodiments, and the powder supply devices 500 and 530 of the first and second comparative examples. As illustrated in Fig. 16, in the powder supply devices 90, 100, and 110 according to the fourth to sixth embodiments, at least one of the shape of the hopper or the auger screw is changed from the powder supply device 50 according to the second embodiment.

In the powder supply device 90 according to the fourth embodiment, the height H1 of the steep slope surface 53 of a hopper 91 is 6 mm, and the height H2 of the second gentle slope surface 24 is 12 mm. In addition, the outer diameter D1 of the blade 13B of the auger screw 13 is 8 mm, and the pitch P1 of the blade 13B is 3 mm. The length of a region of the auger screw 13 where the blade 13B is provided is the same as that of the powder supply device 50 according to the second embodiment. For example, the number of blades 13B of the auger screw 13 is ten. In addition, the upper end of the blade 13B of the auger screw 13 is disposed above the lower end of the steep slope surface 53.

In the powder supply device 100 according to the fifth embodiment, the hopper 51 is provided as in the powder supply device 50 according to the second embodiment, but an auger screw 93 is changed. That is, the height H1 of the steep slope surface 53 of the hopper 51 is 6 mm, and the height H2 of the second gentle slope surface 24 is 6 mm. In addition, the length of a region of the auger screw 93 where the blade 13B is provided is shorter than the length of a region of the auger screw 13 where the blade 13B is provided. For example, the number of blades 13B of the auger screw 93 is five. In the fifth embodiment, the upper end of the blade 13B of the auger screw 93 is disposed at substantially the same position as the lower end of the steep slope surface 53.

In the powder supply device 110 according to the sixth embodiment, the hopper 91 is provided as in the powder supply device 90 according to the fourth embodiment, but the auger screw 93 is changed. That is, the height H1 of the steep slope surface 53 of the hopper 91 is 6 mm, and the height H2 of the second gentle slope surface 24 is 12 mm. The length of a region of the auger screw 93 where the blade 13B is provided is shorter than the length of a region of the auger screw 13 where the blade 13B is provided, and the number of blades 13B is five, for example. In the sixth embodiment, the upper end of the blade 13B of the auger screw 93 is disposed below the lower end of the steep slope surface 53.

Note that configurations other than the above-described configuration are similar to those of the powder supply device 10 according to the first embodiment and the powder supply device 50 according to the second embodiment.

In the fourth and fifth embodiments, the upper ends of the blades 13B of the auger screws 13 and 93 are disposed at the same level as the lower end of the steep slope surface 53 or above the lower end of the steep slope surface.

As a result, the particles that are difficult to roll (for example, small particles SP) are moved from the outer side to the central portion of the hoppers 51 and 91 due to the change from the first gentle slope surface 21 to the steep slope surface 53. The segregation is suppressed by the movement of the small particles SP, but in a case where the auger screws 13 and 93 for transporting the powder P are disposed in the vicinity of the movement destination of the small particles SP, the powder P in a state where the segregation is suppressed can be sent to the auger screws 13 and 93.

As in the sixth embodiment, in the configuration in which the upper end of the blade 13B of the auger screw 93 is disposed below the lower end of the steep slope surface 53, after segregation of the powder P is suppressed once, segregation may progress again between the lower end of the steep slope surface 53 and the auger screw 93 in some cases.

For this reason, it is preferable that the positional relationship between the upper end of the blade 13B of the auger screws 13 and 93 and the lower end of the steep slope surface 22 in the height direction is the above-described configuration.

### (Verification of influence of shape of hopper on powder)

An experiment of continuously filling the powder P using the powder supply devices 90, 100, and 110 according to the fourth to sixth embodiments and acquiring the proportion of the small particles SP of the powder P in the hopper was performed. The conditions of the powder P used are similar to those in the case of the powder supply device 10 according to the first embodiment.

In addition, in the powder supply device 530 of the second comparative example, the hopper 501 is provided as in the powder supply device 500 of the first comparative example, but the auger screw 93 is changed.

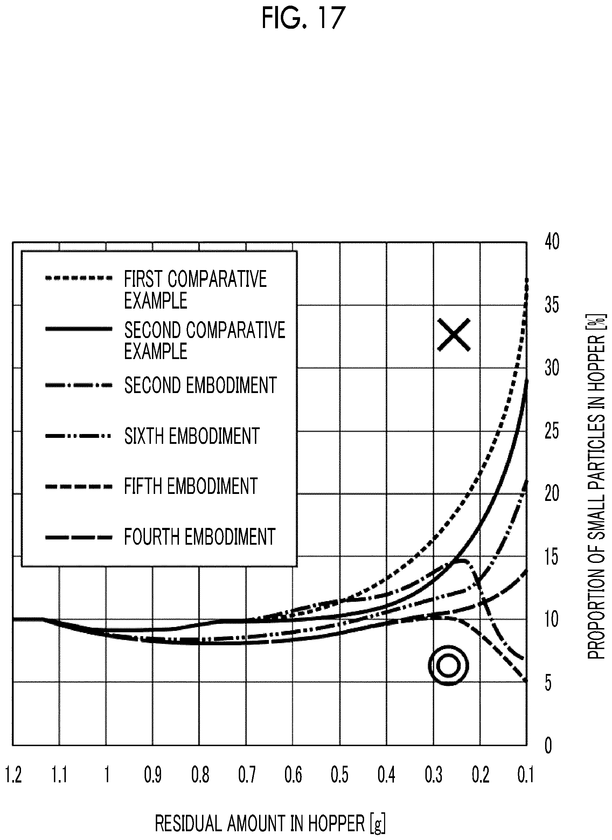

Fig. 17 is a graph illustrating a relationship between the residual amount of the powder P in the hopper and the proportion of the small particles SP in the hopper in the powder supply device 50 according to the second embodiment, the powder supply devices 90, 100, and 110 according to the fourth to sixth embodiments, and the powder supply devices 500 and 530 of the first and second comparative examples.

As illustrated in Figs. 16 and 17, the segregation of the powder P in the hopper 501 progressed in the powder supply devices 500 and 530 of the first and second comparative examples. On the other hand, in the powder supply devices 50, 90, and 100 according to the second, fourth, and fifth embodiments, the upper end of the blade 13B of the auger screw 13 or 93 is disposed above the lower end of the steep slope surface 53, and it is confirmed that the segregation of the powder P in the hopper is eliminated. In addition, in the powder supply device 110 according to the sixth embodiment, the upper end of the blade 13B of the auger screw 93 is disposed below the lower end of the steep slope surface 53. In the powder supply device 110 according to the sixth embodiment, the segregation of the powder P in the hopper 91 is not eliminated, but it is confirmed that the segregation of the powder P is suppressed as compared with the powder supply devices 500 and 530 of the first and second comparative examples.

### [Seventh to twelfth embodiments]

Next, powder supply devices according to seventh to twelfth embodiments will be described. In a case where the seventh to twelfth embodiments have the same components, members, and the like as those of the first to sixth embodiments, the components, members, and the like will be denoted by the same reference numerals as the reference numerals used in the first to sixth embodiments and the detailed description thereof will be omitted.

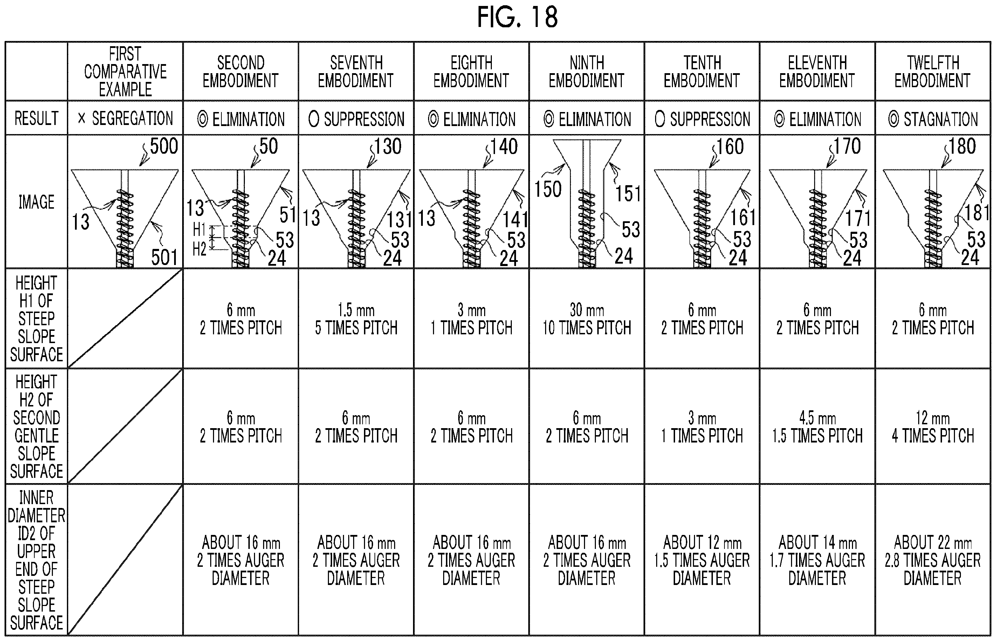

Fig. 18 is a diagram illustrating conditions and results of an experiment conducted to investigate a status of segregation of the powder P in powder supply devices 130, 140, 150, 160, 170, and 180 according to the seventh to twelfth embodiments and the powder supply device 500 of the first comparative example. Fig. 18 also illustrates the conditions and the results of the experiment of the powder supply device 50 according to the second embodiment. As illustrated in Fig. 18, in the powder supply devices 130, 140, 150, 160, 170, and 180 according to the seventh to twelfth embodiments, the shape of the hopper is changed from the powder supply device 50 according to the second embodiment. In the seventh to twelfth embodiments, the outer diameter D1 of the blade 13B of the auger screw 13 is 8 mm, and the pitch P1 of the blade 13B is 3 mm.

In the powder supply device 50 according to the second embodiment, the height H1 of the steep slope surface 53 of the hopper 121 is 6 mm, that is, 2 times the pitch P1 of the blade 13B. The height H2 of the second gentle slope surface 24 is 6 mm, that is, 2 times the pitch P1 of the blade 13B. In addition, the inner diameter of the upper end of the steep slope surface 53 is about 16 mm, that is, 2 times the outer diameter D1 of the blade 13B of the auger screw 13.

In the powder supply device 130 according to the seventh embodiment, as a configuration different from the powder supply device 50 according to the second embodiment, the height H1 of the steep slope surface 53 of a hopper 131 is changed to 1.5 mm, that is, 0.5 times the pitch P1 of the blade 13B.

In the powder supply device 140 according to the eighth embodiment, as a configuration different from the powder supply device 50 according to the second embodiment, the height H1 of the steep slope surface 53 of a hopper 141 is changed to 3 mm, that is, 1 times the pitch P1 of the blade 13B.

In the powder supply device 150 according to the ninth embodiment, as a configuration different from the powder supply device 50 according to the second embodiment, the height H1 of the steep slope surface 53 of a hopper 151 is changed to 30 mm, that is, 10 times the pitch P1 of the blade 13B.

In the powder supply device 160 according to the tenth embodiment, as a configuration different from the powder supply device 50 according to the second embodiment, the height H2 of the second gentle slope surface 24 of a hopper 161 is changed to 3 mm, that is, 1 times the pitch P1 of the blade 13B. In addition, the inner diameter ID2 of the upper end of the steep slope surface 53 is changed to about 12 mm, that is, 1.5 times the outer diameter D1 of the blade 13B of the auger screw 13.

In the powder supply device 170 according to the eleventh embodiment, as a configuration different from the powder supply device 50 according to the second embodiment, the height H2 of the second gentle slope surface 24 of a hopper 171 is changed to 4.5 mm, that is, 1.5 times the pitch P1 of the blade 13B. In addition, the inner diameter ID2 of the upper end of the steep slope surface 53 is changed to about 14 mm, that is, 1.7 times the outer diameter D1 of the blade 13B of the auger screw 13.

In the powder supply device 180 according to the twelfth embodiment, as a configuration different from the powder supply device 50 according to the second embodiment, the height H2 of the second gentle slope surface 24 of a hopper 181 is changed to 12 mm, that is, 4 times the pitch P1 of the blade 13B. In addition, the inner diameter ID2 of the upper end of the steep slope surface 53 is changed to about 22 mm, that is, 2.8 times the outer diameter D1 of the blade 13B of the auger screw 13.

Note that configurations other than the above-described configuration are similar to those of the powder supply device 10 according to the first embodiment and the powder supply device 50 according to the second embodiment.

In the seventh to twelfth embodiments, at least one of a condition in which the height H2 of the second gentle slope surface 24 in the rotation axis direction of the auger screw 13 is 1.5 times or more the pitch of the blade 13B, a condition in which the height H1 of the steep slope surface 53 in the rotation axis direction of the auger screw 13 is 1 times or more the pitch P1 of the blade 13B of the auger screw 13, or a condition in which the inner diameter ID2 of the upper end of the steep slope surface 53 is 1.7 times or more the outer diameter D1 of the blade 13B of the auger screw 13 is satisfied.

For this reason, in the seventh to twelfth embodiments, the interval between the second gentle slope surface 24 or the steep slope surface 53 and the auger screw 13 in the lateral direction is wider than the interval between the discharge unit 12 and the auger screw 13 in the lateral direction (direction orthogonal to the rotation shaft 13A). In a case where the interval between the second gentle slope surface 24 or the steep slope surface 53 and the auger screw 13 is relatively wide, for example, the small particles SP entering the steep slope surface 53 or the second gentle slope surface 24 are likely to move toward the auger screw 13. As a result, segregation of the powder P is on its way to being eliminated or the progress of segregation is suppressed. By setting the height of the second gentle slope surface 24 or the steep slope surface 53 in the up-down direction to 1.5 times or 1 times or more the pitch P1 of the blade 13B, the section in the up-down direction where segregation of the powder P is suppressed can be made longer as compared to a case where the height thereof is set to be smaller than the above-mentioned height, and thus the segregation-suppressing effect is improved.

### (Verification of influence of shape of hopper on powder)

An experiment of continuously filling the powder P using the powder supply devices 50, 130, 140, 150, 160, 170, and 180 according to the second and seventh to twelfth embodiments and acquiring the proportion of the small particles SP of the powder P in the hopper was performed. The conditions of the powder P used are similar to those in the case of the powder supply device 10 according to the first embodiment.

As in the powder supply devices 50, 140, 150, and 170 according to the second, eighth, ninth, and eleventh embodiments, in a case where the height H1 of the steep slope surface 53 of the hopper 151 is 1 times or more (3 mm or more) the pitch P1 of the blade 13B of the auger screw 13, it is confirmed that the segregation of the powder P in the hopper is eliminated. In addition, as in the powder supply device 130 according to the seventh embodiment, in a case where the height H1 of the steep slope surface 53 of the hopper 151 is 0.5 times (1.5 mm) the pitch P1 of the blade 13B of the auger screw 13, the segregation of the powder P in the hopper is not eliminated, but it is confirmed that the segregation of the powder P is suppressed as compared with the powder supply device 500 of the first comparative example.

In addition, as in the powder supply devices 50, 170, and 180 according to the second, eleventh, and twelfth embodiments, in a case where the height H2 of the second gentle slope surface 24 of the hopper is 1.5 times or more (4.5 mm or more) the pitch P1 of the blade 13B of the auger screw 13, it is confirmed that the segregation of the powder P in the hopper is eliminated or stagnated. As in the powder supply device 160 according to the tenth embodiment, in a case where the height H2 of the second gentle slope surface 24 of the hopper is 1 times or more (3 mm or more) the pitch P1 of the blade 13B of the auger screw 13, the segregation of the powder P in the hopper is not eliminated, but it is confirmed that the segregation of the powder P is suppressed as compared with the powder supply device 500 of the first comparative example.

In addition, as in the powder supply devices 120, 170, and 180 according to the second, eleventh, and twelfth embodiments, in a case where the inner diameter ID2 of the upper end of the steep slope surface 53 is 1.7 times or more the outer diameter D1 of the blade 13B of the auger screw 13, it is confirmed that the segregation of the powder P in the hopper is eliminated or stagnated.

### [Thirteenth embodiment]

Next, a powder supply device of a thirteenth embodiment will be described. In a case where the thirteenth embodiment has the same components, members, and the like as those of the first to twelfth embodiments, the components, members, and the like will be denoted by the same reference numerals as the reference numerals used in the first to twelfth embodiments and the detailed description thereof will be omitted.

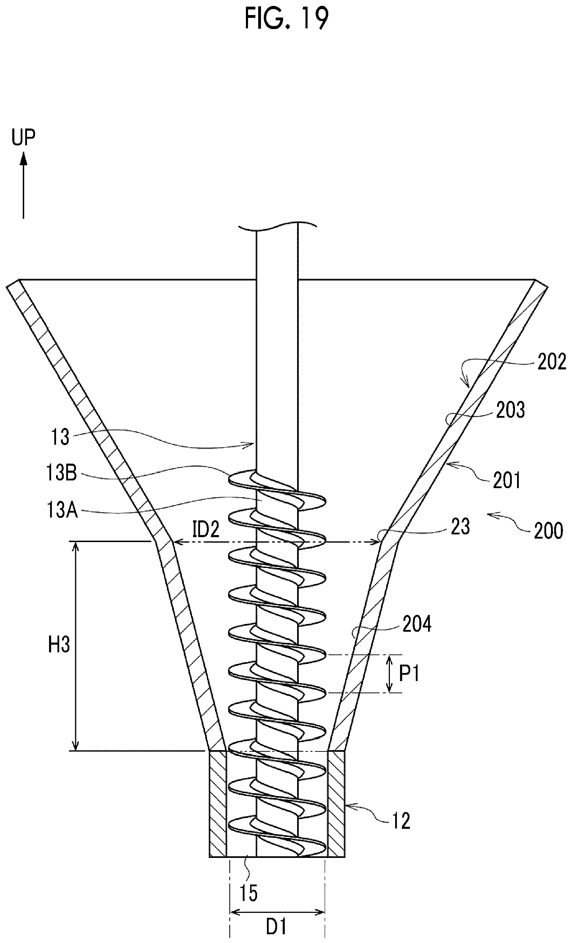

Fig. 19 illustrates a configuration of a hopper 201 used in a powder supply device 200 according to the thirteenth embodiment. As illustrated in Fig. 19, an inner wall surface 202 of the hopper 201 has one gentle slope surface 203 that has a relatively gentle tilt angle with respect to the horizontal direction, one steep slope surface 204 that is positioned below the gentle slope surface 203 and has a relatively steep tilt angle with respect to the horizontal direction, and one boundary portion 23 that changes from the gentle slope surface 203 to the steep slope surface 204.

In the hopper 201, the lower end of the steep slope surface 204 is directly connected to the upper end of the discharge unit 12.

In addition, in the powder supply device 200, it is preferable that at least one of a condition in which a height H3 from the lower end to the upper end of the steep slope surface 204 is 6 times or more the pitch P1 of the blade 13B of the auger screw 13 or a condition in which the inner diameter ID2 of the upper end of the steep slope surface 204 is 2 times or more the outer diameter D1 of the blade 13B of the auger screw 13 is satisfied.

For example, the outer diameter D1 of the blade 13B of the auger screw 13 is 8.2 mm, and the pitch P1 of the blade 13B is 3 mm. For example, the height H3 from the lower end to the upper end of the steep slope surface 204 is 18 mm and is set to be 6 times the pitch P1 of the blade 13B of the auger screw 13. In addition, for example, the inner diameter ID2 of the upper end of the steep slope surface 204 (that is, the inner diameter of the boundary portion 23) is 18 mm and is set to be about 2.2 times the outer diameter D1 of the blade 13B of the auger screw 13.

In addition, in the powder supply device 200, it is preferable that the difference between the inner diameter ID2 of the upper end of the steep slope surface 204 and the outer diameter D1 of the blade 13B of the auger screw 13 is set to be 10 times or more the average particle diameter of the powder P. For example, the difference between the inner diameter ID2 of the upper end of the steep slope surface 204 and the outer diameter D1 of the blade 13B of the auger screw 13 is set to be 10 times the average particle diameter of the powder P.

Note that configurations other than the above-described configuration are similar to those of the powder supply device 10 according to the first embodiment and the powder supply device 50 according to the second embodiment.

In the powder supply device 200 according to the thirteenth embodiment, the following effect is obtained in addition to the effects obtained from the same configuration as the configuration of the powder supply device 10 according to the first embodiment and the configuration of the powder supply device 50 according to the second embodiment.

In the powder supply device 200, since the lower end of the steep slope surface 204 is directly connected to the upper end of the discharge unit 12, the structure is simplified, and the segregation of the powder P in the vicinity of the auger screw 13 is suppressed due to a change in the inclination from the gentle slope surface 203 to the steep slope surface 204.

In addition, in the powder supply device 200, at least one of a condition in which the height H3 from the lower end to the upper end of the steep slope surface 204 is 6 times or more the pitch P1 of the blade 13B of the auger screw 13 or a condition in which the inner diameter ID2 of the upper end of the steep slope surface 204 is 2 times or more the outer diameter D1 of the blade 13B of the auger screw 13 is satisfied. As a result, in the powder supply device 200, in a case where the distance in the up-down direction of the steep slope surface 204, of which the interval from the auger screw 13 in the lateral direction is relatively wider than the interval of the discharge unit 12, is increased, or in a case where the interval between the upper end of the steep slope surface 204 and the outer diameter D1 of the blade 13B of the auger screw 13 in the lateral direction is widened, it is considered that the particles that are difficult to roll (for example, small particles SP) are likely to enter the section of the steep slope surface 204 and are likely to move toward the auger screw 13, and therefore, the segregation-suppressing effect is improved.

In addition, in the powder supply device 200, the difference between the inner diameter ID2 of the upper end of the steep slope surface 204 and the outer diameter D1 of the blade 13B of the auger screw 13 is set to be 10 times or more the average particle diameter of the powder P. As a result, in the powder supply device 200, the interval between the upper end of the steep slope surface 204 and the auger screw 13 in the lateral direction is relatively widened. As a result, it is considered that the particles that are difficult to roll (for example, small particles SP) are likely to enter the section of the steep slope surface 204 and are likely to move toward the auger screw 13, and therefore, the segregation-suppressing effect is improved.

### (Verification of influence of shape of hopper on powder)

An experiment of continuously filling the powder P using the powder supply device 200 according to the thirteenth embodiment and acquiring the proportion of the small particles SP of the powder P in the hopper 201 was performed. The conditions of the powder P used are similar to those in the case of the powder supply device 10 according to the first embodiment.

In this experiment, the outer diameter D1 of the blade 13B of the auger screw 13 is 8 mm, and the pitch P1 of the blade 13B is 3 mm. The height H3 from the lower end to the upper end of the steep slope surface 204 is 18 mm (6 times the pitch P1 of the blade 13B of the auger screw 13).

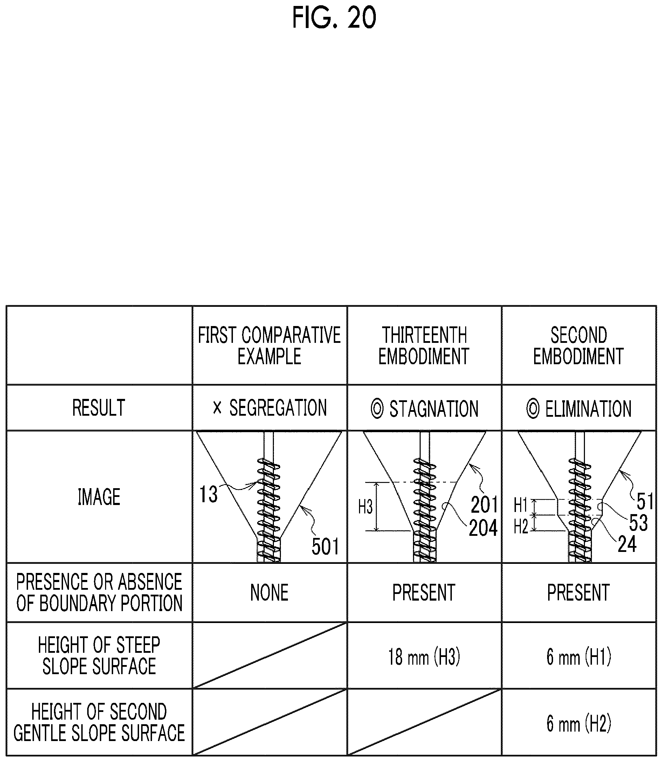

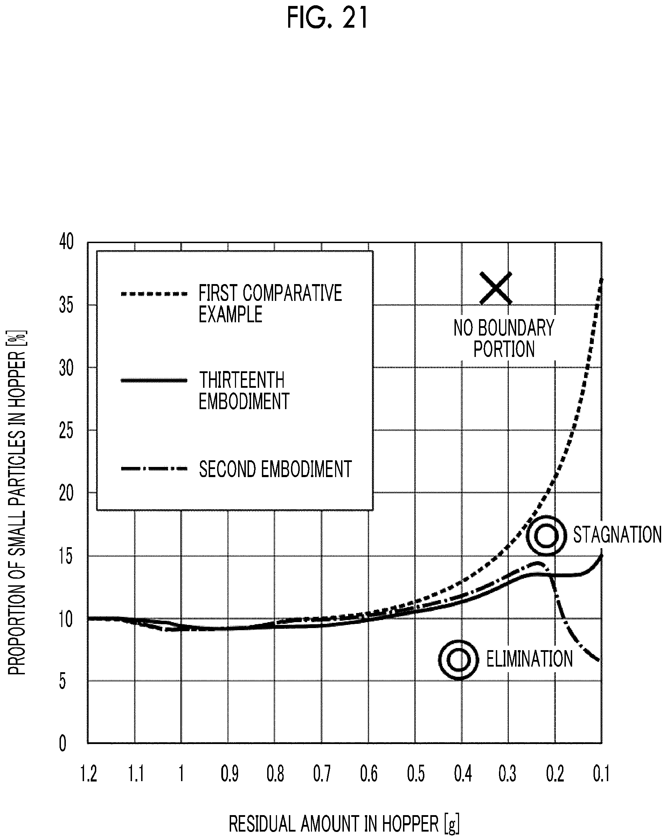

Fig. 20 illustrates conditions and results of an experiment conducted to investigate a status of segregation of the powder P in the powder supply device 200 according to the thirteenth embodiment, the powder supply device 50 according to the second embodiment, and the powder supply device 500 of the first comparative example. In addition, Fig. 21 is a graph illustrating a relationship between the residual amount of the powder P in the hopper and the proportion of the small particles SP in the hopper in the powder supply device 200 according to the thirteenth embodiment, the powder supply device 50 according to the second embodiment, and the powder supply device 500 of the first comparative example.

As illustrated in Figs. 20 and 21, in the powder supply device 500 of the first comparative example, the proportion of the small particles SP is increased monotonically, and the segregation of the powder P in the hopper 501 has progressed. In contrast, in the powder supply device 200 according to the thirteenth embodiment, it is confirmed that the powder P in the hopper 201 approaches the steep slope surface 204 and the progress of segregation is stagnated. In addition, in the powder supply device 50 according to the second embodiment, the segregation of the powder P in the hopper 51 is not only stagnated, but also eliminated, and almost the same distribution is maintained from the initial stage of the start of the supply to the end stage.

### [Fourteenth embodiment]

Next, a powder supply device of a fourteenth embodiment will be described. In a case where the fourteenth embodiment has the same components, members, and the like as those of the first to thirteenth embodiments, the components, members, and the like will be denoted by the same reference numerals as the reference numerals used in the first to thirteenth embodiments and the detailed description thereof will be omitted.

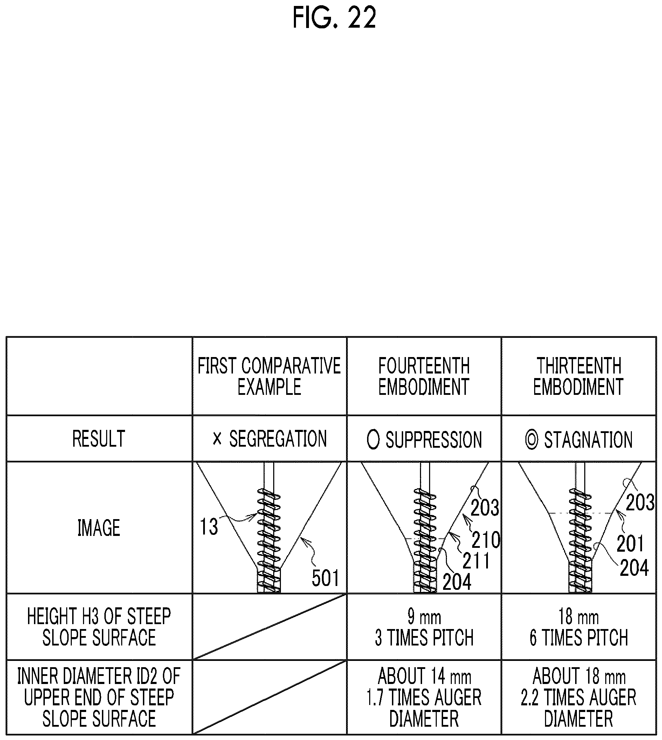

Fig. 22 illustrates conditions and results of an experiment conducted to investigate a status of segregation of the powder P in the powder supply device 200 according to the thirteenth embodiment, a powder supply device 210 according to the fourteenth embodiment, and the powder supply device 500 of the first comparative example.

As illustrated in Fig. 22, in the powder supply device 210 according to the fourteenth embodiment, a hopper 211 including the gentle slope surface 203 and the steep slope surface 204 is provided. In the fourteenth embodiment, the height H3 of the steep slope surface 204 in the up-down direction and the inner diameter ID2 of the upper end of the steep slope surface 204 are changed from the powder supply device 200 according to the fourteenth embodiment.

For example, the outer diameter D1 of the blade 13B of the auger screw 13 is 8.2 mm, and the pitch P1 of the blade 13B is 3 mm. As illustrated in Fig. 22, in the powder supply device 210 according to the fourteenth embodiment, for example, the height H3 from the lower end to the upper end of the steep slope surface 204 is 9 mm and is set to be 3 times the pitch P1 of the blade 13B of the auger screw 13. In addition, for example, the inner diameter ID2 of the upper end of the steep slope surface 204 (that is, the inner diameter of the boundary portion 23) is 14 mm and is set to be about 1.7 times the outer diameter D1 of the blade 13B of the auger screw 13.

Note that configurations other than the above-described configuration are similar to those of the powder supply device 200 according to the thirteenth embodiment.

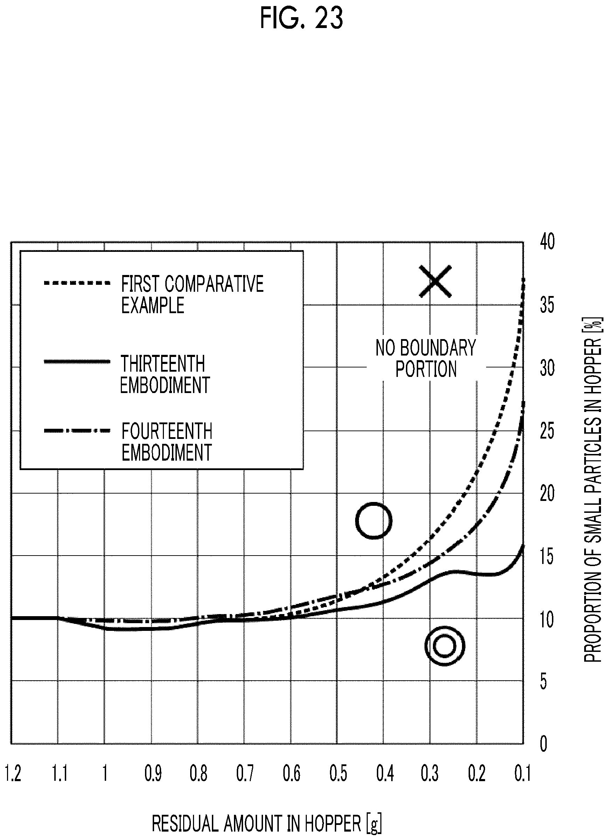

Fig. 23 is a graph illustrating a relationship between the residual amount of the powder P in the hopper and the proportion of the small particles SP in the hopper in the powder supply device 200 according to the thirteenth embodiment, the powder supply device 210 according to the fourteenth embodiment, and the powder supply device 500 of the first comparative example.

As illustrated in Figs. 22 and 23, in the powder supply device 210 according to the fourteenth embodiment, it is confirmed that the segregation of the powder P in the hopper 211 is suppressed as compared with the powder supply device 500 of the first comparative example. In addition, in the powder supply device 200 according to the thirteenth embodiment, it is confirmed that the progress of the segregation of the powder P is stagnated by increasing the height H3 from the lower end to the upper end of the steep slope surface 204.

### [Others]

Note that, in the configuration of the hopper 11 according to the first embodiment, the tilt angles of the first gentle slope surface 21, the steep slope surface 22, and the second gentle slope surface 24 with respect to the horizontal direction can be changed within a range not departing from the present disclosure.

In the configuration of the hopper 71 according to the third embodiment, three sets 54 of the gentle slope surface 73, the boundary portion 23, and the steep slope surface 53 are formed in the up-down direction of the hopper 71, but the present disclosure is not limited to the configuration. For example, two or four or more sets 54 of the gentle slope surface 73, the boundary portion 23, and the steep slope surface 53 may be formed in the up-down direction of the hopper 71.

In addition, in the configuration of the hopper 71 according to the third embodiment, the steep slope surface 53 is substantially parallel to the rotation shaft 13A of the auger screw 13 (that is, a portion where the steep slope surface 53 is formed has a cylindrical shape), but the present disclosure is not limited to the configuration. For example, the tilt angle of the steep slope surface with respect to the horizontal direction may be changed.

In addition, in the configurations of the hoppers 201 and 211 according to the thirteenth and fourteenth embodiments, the tilt angles of the gentle slope surface 203 and the steep slope surface 204 with respect to the horizontal direction can be changed within a range not departing from the present disclosure.

In addition, in the configurations of the hoppers 201 and 211 according to the thirteenth and fourteenth embodiments, the number of sets of the gentle slope surface 203, the boundary portion 23, and the steep slope surface 204 is one, but the present disclosure is not limited to the configuration. For example, two or more sets of the gentle slope surface 203, the boundary portion 23, and the steep slope surface 204 may be formed. In addition, in this case, the configuration may be changed such that the steep slope surface 204 other than the lowermost portion of the steep slope surface 204 is substantially parallel to the rotation shaft 13A of the auger screw 13 (that is, a portion where the steep slope surface 204 is formed has a cylindrical shape).

In each of the above-described embodiments, various processors to be described below can be used as the hardware structures of processing units, which perform various kinds of processing, such as the control unit 18. The various processors include, for example, a CPU which is a general-purpose processor executing software to function as various processing units as described above, a programmable logic device (PLD), such as a field programmable gate array (FPGA), which is a processor of which the circuit configuration can be changed after manufacture, and a dedicated electric circuit, such as an application specific integrated circuit (ASIC), which is a processor having a circuit configuration designed exclusively to execute specific processing.

One processing unit may be configured by one of the various processors or configured by a combination of the same or different kinds of two or more processors (for example, a combination of a plurality of FPGAs and/or a combination of a CPU and an FPGA). In addition, a plurality of processing units may be configured into a single processor.

As an example in which a plurality of processing units are configured into a single processor, there is a form in which a single processor is configured by a combination of one or more CPUs and software, and this processor functions as a plurality of processing units. Secondly, there is a form in which a processor that implements the functions of the entire system including a plurality of processing units using one integrated circuit (IC) chip is used as typified by a system on chip (SoC). In this manner, various processing units are configured by using one or more of the above-described various processors as hardware structures.

Furthermore, specifically, an electric circuit (circuitry) obtained by combining circuit elements, such as semiconductor elements, can be used as the hardware structure of the various processors.

The examples of the present disclosure have been described above, but it goes without saying that the present disclosure is not limited to the above-described examples at all and can be embodied in various aspects without departing from the scope of the present disclosure.

The disclosure of JP2022-035440 filed on March 8, 2022 is incorporated herein by reference in its entirety.

All literatures, patent applications, and technical standards described in the present specification are incorporated in the present specification by reference to the same extent as in a case where the individual literatures, patent applications, and technical standards are specifically and individually stated to be incorporated by reference.

## Claims

1. A powder supply device comprising:
a hopper that accommodates powder and has a funnel-shaped inner wall surface of which an inner diameter is decreased downward, the inner wall surface having at least two surfaces of a gentle slope surface having a relatively gentle tilt angle with respect to a horizontal direction and a steep slope surface having a relatively steep tilt angle with respect to the horizontal direction and having one or more boundary portions that change from the gentle slope surface positioned relatively upward to the steep slope surface positioned relatively downward;
a tubular discharge unit that is connected to a lower portion of the hopper and in which a discharge port through which the powder is discharged is formed at a lower end; and
an auger screw, at least a part of which is disposed in the discharge unit, which transports the powder toward the discharge port, and which has a rotation axis extending in an up-down direction along a cylinder axis of the discharge unit and a helical blade provided around the rotation axis.

2. The powder supply device according to claim 1,
wherein in a case where the gentle slope surface is a first gentle slope surface, a second gentle slope surface having a gentler inclination than the steep slope surface is provided between the steep slope surface and an upper end of the discharge unit, and
the second gentle slope surface of the hopper and the discharge unit are connected to each other.

3. The powder supply device according to claim 2,
wherein an upper end of the blade of the auger screw is disposed at the same level as a lower end of the steep slope surface or above the lower end of the steep slope surface.

4. The powder supply device according to claim 2 or 3,
wherein at least one of a condition in which a height of the second gentle slope surface in a rotation axis direction of the auger screw is 1.5 times or more a pitch of the blade, a condition in which a height of the steep slope surface in the rotation axis direction of the auger screw is 1 times or more the pitch of the blade of the auger screw, or a condition in which an inner diameter of an upper end of the steep slope surface is 1.7 times or more an outer diameter of the blade of the auger screw is satisfied.

5. The powder supply device according to any one of claims 2 to 4,
wherein a condition in which a difference between an inner diameter of an upper end of the steep slope surface and an outer diameter of the blade of the auger screw is 5 times or more an average particle diameter of the powder is satisfied.

6. The powder supply device according to claim 1,
wherein a lower end of the steep slope surface and an upper end of the discharge unit are directly connected to each other.

7. The powder supply device according to claim 6,
wherein at least one of a condition in which a height from the lower end to an upper end of the steep slope surface is 6 times or more a pitch of the blade of the auger screw or a condition in which an inner diameter of the upper end of the steep slope surface is 2 times or more an outer diameter of the blade of the auger screw is satisfied.

8. The powder supply device according to claim 6 or 7,
wherein a difference between an inner diameter of an upper end of the steep slope surface and an outer diameter of the blade of the auger screw is set to be 10 times or more an average particle diameter of the powder.

9. The powder supply device according to any one of claims 1 to 8,
wherein a plurality of sets of the gentle slope surface, the boundary portion, and the steep slope surface are formed in an up-down direction of the hopper.

10. The powder supply device according to any one of claims 1 to 9,
wherein the one or more steep slope surfaces are parallel to the rotation axis of the auger screw.
